# EUROPEAN PATENT APPLICATION

(11) **EP 1 345 192 A2**
(43) Date of publication of application: **17.09.2003**
(21) Application number: 02258108.6
(22) Date of filing: 26.11.2002
(51) Int. Cl.: G09B 5/00

(54) **System and method for tracking user certification and training**

(30) Priority: 26.11.2001 US 995287
(71) Applicant: Dana Commercial Credit Corporation, Maumee, Ohio 43537 (US)
(72) Inventor: Bly, J. Aaron, Maumee, Ohio 43537 (US); Melby, John M., Mansfield, Texas 76063 (US); Sherman, Ryan J., Perrysburg, Ohio 43551 (US)
(74) Representative: Cheyne, John Robert Alexander M.

(57) **Abstract**

A computer based system automatically gathers, analyzes, and delivers information relating to the procurement and utilization of a plurality of such assets, such as a fleet of industrial equipment, so as to maximize productivity and to reduce operating costs and administrative burdens. The system can incorporate predefined rules which include business policies and government regulations in order to track and enforce authorization requirements relating to a particular asset. Unauthorized users can be prevented from using an asset, or the system can be configured to mere identify unauthorized users and uses by generating the appropriate reports. User authorization can include user training and other certification characteristics. The system can be configured to automatically schedule the training required to preserve and enhance user certifications. If an outside entity is relied on for training, the system can automatically generate an invoice for such training. The system can provide online training sessions. Authorization requirements (including government requirements such as OSHA regulations), product safety information, and other online materials can be incorporated into the system. The system can be incorporated into a comprehensive asset management system.

## Description

### RELATED APPLICATIONS

This application claims the benefit of U.S. Application Serial No. 09/441,289 filed November 16, 1999, U.S. Provisional Application Serial No. 60/166,042 filed November 17, 1999, U.S. Application Serial No. 09/503,671 filed February 14, 2000, U.S. Application Serial No. 09/504,000 filed February 14, 2000, U.S. Application Serial No. 09/504,343 filed February 14, 2000, US Application Serial No. 09/653,735 filed September 1, 2000, U.S. Application Serial No. 09/702,363 filed October 31, 2000, and U.S. Application Serial No. 09/714,702 filed on November 16, 2000, the contents of which are all hereby incorporated in their entirety by reference.

### BACKGROUND OF THE INVENTION

The present invention relates in general to systems that track user certification and training with respect to particular assets. In particular, this invention relates to a computer based system for automatically preventing improper use of assets, scheduling training to preserve or enhance user certifications, and generating training invoices if the training is performed by an outside organization.

Many businesses operate a plurality of physical assets to assist in the performance of the daily activities that are required to produce goods or services. For example, a typical manufacturer of goods often uses a fleet of industrial equipment, such as forklifts, conveyors, machine tools, and the like, in its daily operations to facilitate the manufacture of goods for its customers. In a similar manner, a typical provider of services also often employs a plurality of assets, such as computers, communications equipment, photo imaging equipment, and the like, in its daily operations to facilitate the performance of services for its customers. Traditionally, businesses have purchased such assets for use in their facilities and have employed staff to operate and maintain the assets in furtherance of the manufacture of goods or the performance of services. Typically, businesses do not track and enforce user training in a comprehensive or systematic manner.

Regardless of the specific nature of the business, the operation of these assets has usually been considered to be somewhat ancillary to the core nature of the business. In other words, although the use of these assets is helpful (indeed, sometimes necessary) for the business to manufacture the goods or provide the services in a cost efficient manner, the ownership, operation, and maintenance of such assets is not, of itself, a core function of the business. Consequently, the costs associated with the procurement and utilization of such assets have not been traditionally monitored or analyzed by the business in great detail. Rather, such costs have usually been considered to be relatively fixed costs of doing business, and any management of such assets has been performed, if at all, by relatively low level employees having little training or inclination to increase productivity and reduce costs. Similarly, inadequate attention is often given to issues relating to user training and certification.

Obviously, many businesses have been able to produce goods and provide services without actively managing the costs of obtaining and operating these assets. However, optimization of productivity and minimization of costs are key considerations in the modern business environment. One contributing factor to the inefficient use of such assets is that users of such assets often receive insufficient training. Thus, it would be desirable for a computer based system to automatically monitor the training requirements associated with particular assets, and for such a system to automatically schedule user training consistent with an organization's internal policies as well as government requirements.

It would also be desirable to be able to provide different parties having an interest in the asset ready access to up-to-date real-time and historical access to the information associated with user training, certification, and authorization. For example, besides the business using the asset, there is often a third party maintenance organization that helps to maintain the asset and a leasing company acting as the true asset owner that leases the asset to the business. Because the leasing company lacks appropriate information concerning the asset, the leasing arrangement typically takes this lack of information into account as part of the lease transaction, often through a combination of both a fixed lease amount tied to the asset regardless of use, as well as a financial cushion for the benefit of the true asset owner to cover unforeseen problems associated with the asset including over-use and improper maintenance.

If the leasing company and the business both had ready access to the same information relating to user training, certification, and authorization, the leasing company may be willing to share an increased portion of the financial risk/reward associated with the asset's usage, maintenance, performance, and the like. With appropriate objective information relating to user training, authorization, and certification, it may be possible to distribute a portion of the responsibility to other responsible third parties including the asset manufacturer or supplier, and asset maintenance organization.

Unauthorized use of equipment can result in personal injuries, misuse of the equipment, the necessity of performing otherwise unnecessary maintenance work on the particular piece of equipment, or other costs and inefficiencies. It would be desirable for a system to incorporate predefined authorization rules based on company policies and government requirements, and for such a system to prohibit, impede, or identify unauthorized users of equipment.

The use of equipment by otherwise authorized users lacking in training or lacking in recent training, can similarly result in personal injuries, misuse of equipment, the necessity of performing otherwise unnecessary maintenance work, or other costs and inefficiencies. It would be desirable for a system to monitor and enforce training and certification requirements. It would also be desirable if the system could automatically schedule training in accordance with predefined rules incorporating company policies and government requirements.

A comprehensive system for user authorization, certification, and training may require the involvement of third parties to provide some or all of the training. It would be desirable for a system to automatically generate invoices for training performed by a different entity, organization, or business than the entity, organization, or business of the user or owner.

### SUMMARY OF THE INVENTION

This invention relates to a computer based system for tracking and enforcing business policies and government requirements relating to the authorization, certification, and training of specific users with respect to specific assets, such as a fleet of industrial equipment, so as to maximize productivity and to reduce operating costs and administrative burdens. Each of the assets is preferably provided with a data acquisition device for sensing and storing one or more operating characteristics associated with the asset or its user, such the identify of the person using the asset, or attempting to initiate use of the asset. That information can be transmitted through space to a receiver connected to a local controller for storing such information and for transmitting such information over the Internet to a remote analysis system. The remote analysis system automatically updates individual records associated with each of the assets and users with the information received from the Internet. In response to such information, the remote analysis system automatically analyzes the newly provided information and generates reports regarding user authorization, user certification, and user training. These reports can be transmitted back over the Internet to an administrative controller for review by one or more persons responsible for managerial review. Additionally or alternatively, the remote analysis system can automatically post such reports on a website and, thus, be made available to one or more of such persons upon request. The information can also be used by the system to prevent unauthorized or uncertified persons from using assets, or at least generate reports identifying unauthorized or uncertified persons and uses.

The information can also be provided to third parties such as maintenance organizations, asset manufacturers or suppliers, and leasing companies. By providing up-to-date real-time and historical information concerning the users of an asset, such third parties are willing to share the risk of the asset's usage, maintenance, and performance through creative arrangements relating to an asset. A maintenance organization, for example, may be willing to enter into a fixed maintenance contract when it has the ability to readily detect unauthorized or under-trained users and is given the ability to take pro-active steps to address problems before they become major. The cost-savings associated with such a pro-active approach may be shared to the benefit of the business and the maintenance organization. Similarly, a leasing company that can reduce ownership risk through user monitoring and appropriate asset utilization is more likely to agree to a hybrid minimum term payment and asset usage billing system or even a usage based billing system with no minimum payments.

In addition to enforcing business policies and government requirements with respect to user authorization, the system can also be used to automatically schedule training in order to preserve and enhance user certifications with respect to the assets. If the training is provided by a different organization than the organization responsible for training expenses, the system can automatically generate an invoice for the training services. The training services can be provided online, in addition to more traditional training options. The system can include online safety and training manuals, which can include business policies and government requirements such as Occupational Safety and Health Administration ("OSHA") regulations, as well as product safety, re-licensing, and other useful or relevant information.

Authorization for a particular user to access a particular asset is based on predetermined rules which can include business policies and government requirements. Such rules can include certification or training requirements. Even if trained or certified, the system can be configured to limit user access based on aggregate time limits, pre-set time ranges, and other relevant attributes. User authentication can be denied if a particular user is found to have too many accidents.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a schematic block diagram of a prior art computer based system for tracking and managing a plurality of assets.

Fig. 2 is a flow chart of a prior art method for tracking and managing assets in accordance with the prior art computer based system illustrated in Fig. 1.

Fig. 3 is a schematic block diagram of a computer-based system for tracking and managing a plurality of assets in accordance with this invention.

Figs. 4A through 4C are three portions, respectively, of a flow chart of a method for tracking and managing assets in accordance with the computer based system illustrated in Fig. 3.

Fig. 5 illustrates the relationship of various parties to a database associated with an analysis controller.

Fig. 6 is a flow chart of a subsystem illustrating the analysis of asset-related information to determine responsibility for asset utilization, and developing a lease relationship between an asset owner and an asset user based on asset utilization criteria.

Fig. 7 is a flow chart illustrating the providing of maintenance to an asset in further detail.

Fig. 8 is a flow chart illustrating what happens after a work order is generated based on maintenance approval.

Fig. 9 is a flow chart illustrating an authorization subsystem 200.

Fig. 10 illustrates the operation of data acquisition and analysis subsystem 300.

Fig.11 is a more detailed flowchart of the authorization process and the process by which a user is scheduled for training.

### DETAILED DESCRIPTION OF THE PREFERRED EMBODIMENT

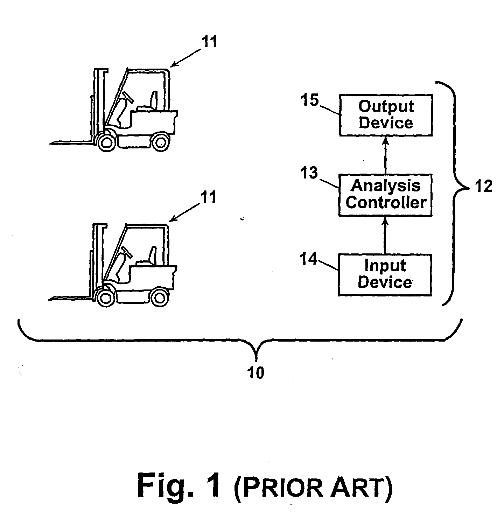

Referring now to the drawings, there is illustrated in Fig. 1 a schematic block diagram of a prior art computer based system, indicated generally at 10, for tracking and managing a plurality of assets, several of which are indicated generally at 11. The assets 11 are illustrated as being a plurality of pieces of movable industrial equipment, such as a plurality of conventional forklifts or similar machinery, used in the manufacture of goods in a typical factory environment. However, the prior art method could be used to track and manage any type of asset 11, such as those described above, used in the manufacture of goods or the performance of services. The basic structure and operation of each of the forklifts 11 are well known in the art and, therefore, require no discussion for a complete understanding of this invention.

The prior art system 10 further included a remote analysis system, indicated generally at 12, for tracking and managing the assets 11. The remote analysis system 12 was completely separate and apart from the assets 11 and included an analysis controller 13 having one or more input devices 14 and one or more output devices 15 connected thereto. The remote analysis system 12 could be embodied as any conventional electronic controller, such as a microprocessor-based computer device. The input device 14 was embodied as a keyboard or other conventional mechanism for manually inputting data in electronic form to the analysis controller 13 for processing in the manner described below. The output device 15 was embodied as a printer or other conventional mechanism for generating a hard copy of the management information generated by the analysis controller 13 in the manner described below. The prior art system 10 does not provide an integrative or comprehensive tool for automatically tracking and enforcing predefined authorization rules relating to asset access. The prior art system 10 does not provide a means for managing the training and certification of users of the assets 11.

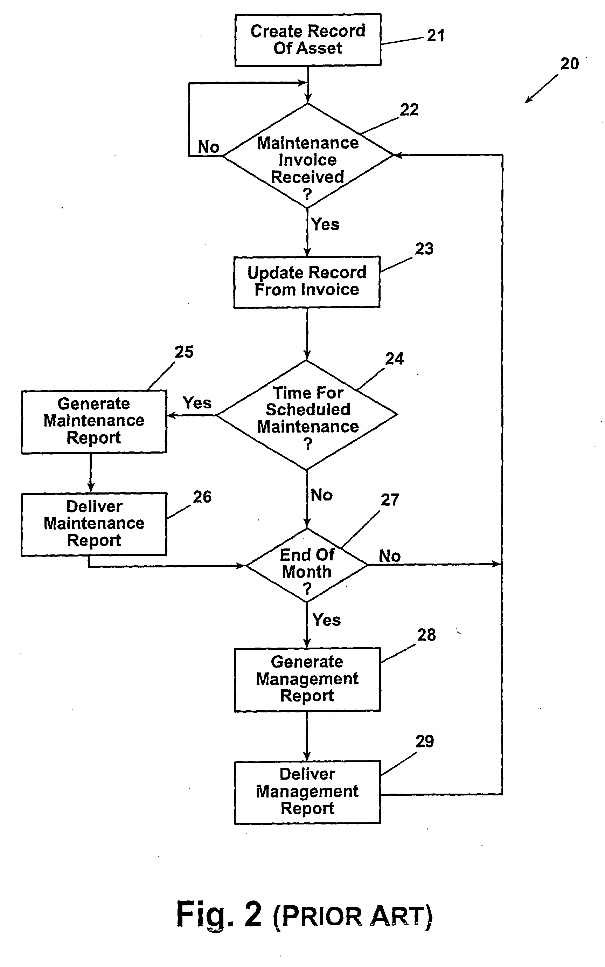

Referring now to Fig. 2, there is illustrated a flow chart, indicated generally at 20, of a prior art method for tracking and managing the assets 11 in accordance with the prior art computer based system 10 illustrated in Fig. 1. Throughout this discussion, reference will be made to a first person or entity that owns or operates the assets 11 that are being tracked and to a second person or entity that is responsible for tracking the management information relating to such assets 11. Notwithstanding this, it will be appreciated that a single person or entity may not only own and operate the assets 11, but also track the management information relating thereto.

In an initial step 21 of the prior art method 20, a record was created for each individual asset 11 by the person or entity responsible for tracking such assets, such as one of the forklifts 11 illustrated in Fig. 1. This record was created electronically within the analysis controller 13 by means of the input device 14 and included a variety of information that was desired to be tracked for management purposes. First, the record included information that uniquely identified the particular asset 11 being tracked. Such identification information included, for example, data regarding the make, model, year, and serial number of the asset 11, plus any customer-assigned identification number. Second, the record included information that related to the operational characteristics of the particular asset 11 being tracked, such as the physical requirements or limitations of the asset 11 (mast height, load capacity, type of tires for the forklift 11, for example), the type of fuel used, and the period of time or usage between the performance of periodic maintenance. Third, the record included information relating to the acquisition of the asset 11 by the owner or lessee thereof. Such acquisition information included, for example, the type and date of acquisition (purchase or lease, for example), the name of the owner or lessee, the location at which the asset 11 is used, the expected amount of usage of the asset 11 (one, two, or three shifts, for example), and the cost of the acquisition or lease. Furthermore, the record included an area for adding additional information or remarks as desired.

In a second step 22 of the prior art method 20, it was determined whether a maintenance invoice had been received by the person or entity responsible for tracking the assets 11. Typically, a maintenance invoice was a written communication that was generated created by or at the request of the person or entity that owned or operated the assets 11. The maintenance invoice was usually generated upon the occurrence of an event relating to the particular asset 11 and generally contained information regarding the status of one or more operational characteristics of that asset 11. For example, after a particular forklift 11 had been operated by the person or entity that owned or operated the asset 11 for a particular period of time, it would require the performance of some maintenance. This maintenance may, for example, have constituted routine preventative service as a result of the elapse of a predetermined period of time or usage. Alternatively, such maintenance may have constituted non-routine service, such as a repair of a mechanical breakdown. In either event, a maintenance invoice was generated as a result of the performance of that maintenance. The occurrence of other events related to the assets 11 could also result in the generation of maintenance invoices. In many cases, the maintenance was performed by a maintenance organization having specialized knowledge of asset 11 and its long-term care.

Regardless of the nature of the event that caused them to be generated, the maintenance invoices were generated in hard copy form and contained therein certain information that was desired to be tracked for management purposes, such as the date and nature of the maintenance that was performed, the amount of usage of the asset 11 as of the date of such maintenance, and the cost of such maintenance. To perform the second step 22 of the prior art method 20, the maintenance invoices were required to be physically delivered from the location where the assets 11 were being used or serviced to the location of the analysis controller 13 or to the location of the input device 14 of the analysis controller 13. By physically delivered, it is meant that the maintenance invoice was transmitted in a non-electronic, hard copy form (including, for example, by facsimile) from the person or entity that owned or operated the asset 11 (and who performed, or had performed, the maintenance on the asset 11) to the person or entity responsible for tracking the assets 11.

As shown in Fig. 2, the prior art method 20 continuously repeated step 22 until it was determined that a maintenance invoice had been received by the person or entity responsible for tracking the assets 11. When that occurred, the prior art method branched from the step 22 to a step 23, wherein the record contained in the analysis controller 13 relating to the particular asset 11 was updated with the information contained in the maintenance invoice. This step 23 was accomplished by utilizing the input device 14 to manually enter the information contained in the maintenance invoice into the record relating to the particular asset 11 contained in the analysis controller 13.

Based upon the updated information contained in the record of the asset 11, the analysis controller 13 was programmed to perform a fourth step 24 of the prior art method 20, wherein it was determined whether a sufficient period of time or usage had elapsed as to trigger the performance of periodic routine maintenance for that asset 11. Typically, such determination was made by determining the amount of the elapsed time or usage of the asset 11 (by comparing the most recent indication of the date or amount of usage of the asset 11 with the previous date or amount of usage contained in the record stored in the analysis controller 13), and by comparing such elapsed time or amount of usage with a predetermined standard (also contained in the record of the asset 11 stored in the analysis controller 13). If it was determined that a sufficient amount of elapsed time or amount of usage had occurred, the method 20 branched from the step 24 to a step 25, wherein a hard copy maintenance report was generated by the output device 15. Then, in step 26 of the prior art method 20, the maintenance report generated in the step 25 was physically delivered from the person or entity responsible for tracking the asset 11 to the person or entity that owned or operated the asset 11. The maintenance report advised the person or entity that owned or operated the asset 11 that the time had arrived for the performance of periodic routine maintenance.

Thereafter, the prior art method 20 entered a step 27, wherein it was determined whether a predetermined period of time had elapsed to generate a periodic management report covering some or all of the assets 11 being tracked. Alternatively, if in step 24 of the prior art method 20, it was determined that a sufficient amount of elapsed time or amount of usage had not yet occurred, the method 20 branched directly from the step 24 to the step 27. In either event, such management reports were typically generated on a monthly basis. Thus, if the end of the month had occurred, the prior art method 20 branched from the step 27 to a step 28 wherein a hard copy management report was generated by the output device 15. Then, in step 29 of the prior art method 20, the management report generated in the step 28 was physically delivered from the person or entity responsible for tracking the asset 11 to the person or entity that owned or operated the asset 11 The management report advised the person or entity that owned or operated the asset 11 of the status of some or all of the assets 11 that were being tracked, allowing various management oversight and decisions to be made at that time. Thereafter, the prior art method 20 returned from the step 29 to the step 22, wherein it was determined whether a maintenance invoice had been created by or at the request of the person or entity that owns or operates the assets 11 and was physically delivered to the person or entity responsible for tracking the assets 11. Alternatively, if in step 27 of the prior art method 20, it was determined that a predetermined period of time had not yet elapsed to generate a periodic management report covering some or all of the assets 11 being tracked, then the method 20 returned directly from the step 27 to the step 22.

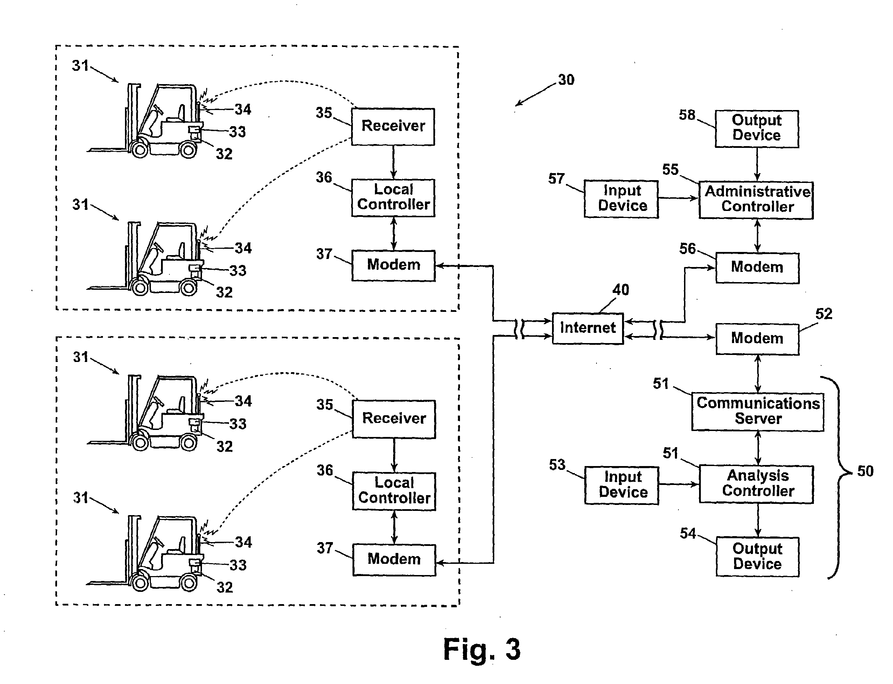

Referring now to Fig. 3, there is illustrated schematic block diagram of a computer based system, indicated generally at 30, for tracking and managing a plurality of assets, indicated generally at 31, in accordance with this invention. As with the prior art system 10 described above, the illustrated assets 31 are represented as a plurality of pieces of movable industrial equipment, such as a plurality of conventional forklifts or similar machinery, used in the manufacture of goods in a factory environment. However, the method of this invention can be used to track and manage any type of asset 31, such as those described above, used in the manufacture of goods or the performance of services.

As above, the basic structure and operation of each of the forklifts 31 are well known in the art, and, therefore, require no discussion for a complete understanding of this invention. However, unlike the forklifts 11 of the prior art system 10, a data acquisition device 32 is provided on each of the forklifts 31 for sensing and storing one or more operating characteristics of the associated forklift 31. The basic structure and operation of each of the data acquisition devices 32 are conventional in the art. For example, each of the data acquisition devices 31 may be embodied as an electronic processor or controller that can sense or be otherwise responsive to one or more operating conditions of the associated forklift 31. Each of the data acquisition devices 31 can be responsive to any desired operating conditions of the forklift 31 that might be considered important in making effective management decisions regarding the operation of the forklift 31. Such desired operating conditions can, for example, include the time duration of use (and non-use), distances traveled, the extent of fork usage, the nature of hydraulic system utilization, and the like. More typically for industrial assets, the most important criteria is time duration of use. The sensed operating conditions of the forklifts 31 are preferably stored at least temporarily in a memory of the data acquisition device 32 for subsequent communication to a remote analysis system, indicated generally at 50, for analysis in the manner described in detail below. Thus, the data acquisition devices 32 sense and store the desired operating conditions for each of the forklifts 31 during use.

Each of the forklifts 31 is further provided with a transmitter 33 or other communications system for transmitting the acquired data from the data acquisition device 32 to the remote analysis system 50 for analysis. Each of the transmitters 33 may be embodied as any conventional device for transmitting the acquired data to the remote analysis system 50, such as a hard-wired communications interface. However, as is well known, each of the forklifts 31 is a movable vehicle that is capable of traveling extensively throughout the particular environment in which it is used. To facilitate the transmission of the acquired data, therefore, the transmitter 33 is preferably embodied as a wireless communications system, such as represented by an antenna 34. The transmitters 33 and the wireless communications systems 34 can be embodied as conventional radio frequency transmitters provided on each of the forklifts 31 that transmit electromagnetic signals. However, other well known forms of wireless communication, such as those utilizing light or sound, may be used in lieu of a radio frequency transmitter.

The wireless communications systems 34 are adapted to transmit signals that are representative of the sensed operating conditions of the forklifts 31 through space to a receiver 35. In contrast to the forklifts 31 that can travel extensively throughout the environment in which they are operated, the receiver 35 is preferably provided at a fixed location within that environment. If desired, a plurality of such receivers 35 may be provided at different locations within the environment in which the forklifts 31 are operated. As the forklifts 31 move about the environment during use, they will occasionally pass by or near the receiver 35. When this occurs, the receiver 35 receives the data transmitted from the respective data acquisition units 32. The receiver 35 is also conventional in the art.

Preferably, the data acquisition units 32 and the receivers 35 are in bi-directional communication with one another. One advantage of such bi-directional communication is that the data acquisition unit 32 can send out a query signal on a predetermined basis to be received by the receiver 35 when the two units 32 and 35 are sufficiently close to communicate reliably with one another. Thus, when the data acquisition unit 32 contacts the receiver 35, the receiver 35 can send a first signal back to the data acquisition unit 32 to instruct it to begin transmitting the acquired data. At the completion of the data transfer, the receiver 35 can send a second signal back to the data acquisition unit 32 to acknowledge the receipt of the transmitted data. A conventional error checking algorithm can be used to confirm the accuracy and completeness of the transmitted data and, if necessary, request a retransmission thereof.

Another advantage of such bi-directional communication is that data in the form of new commands, program updates, instructions, and the like can be sent to the data acquisition units 32 from the receiver 35. In some instances, such as when a data acquisition unit 32 is in generally continuous communication with a receiver 35, a user of the forklift 31 can be prompted to provide certain information for transmission to the receiver 35 for further analysis.

The receiver 35 is connected to a local controller 36. The local controller 36 is also, of itself, conventional in the art and may be embodied as an electronic controller that is adapted to receive and store at least temporarily the data from each of the receivers 35. Alternatively, if the assets 31 are fixed in position, such as in the case of a plurality of stationary machines used in a manufacturing environment, the receiver 35 or receivers 35 may be provided on movable structures that move about the environment to receive the information transmitted therefrom. In either event, it is desirable that the local controller 36 acknowledge receipt of the information transmitted from the data acquisition devices 32, allowing the data acquisition devices 32 to delete the transmitted information and begin storing newly acquired information. A combined system including the data acquisition device 32, the transmitter 33, the wireless communications system 34, the receiver 35, and software for operating the local controller 36 to gather and report data is commercially available, such as from I.D. Systems, Inc. of Hackensack, New Jersey or Requip (formerly SXI).

In a preferred embodiment, the various elements located in an asset 31 are hardwired into the electrical system of the asset to minimize the possibility of undesirable failure or tampering. Such an embodiment of the invention can physically prevent unauthorized use of the assets 31, as is generally described in greater detail below.

Thus, after the forklifts 31 have been operated for a period of time, the local controller 36 will have gathered and stored therein a certain amount of information regarding the individual operating characteristics for each of the forklifts 31. The local controller 36 is programmed to periodically transmit the information stored therein to the remote analysis system 50 for analysis. This can be accomplished by providing the local controller 36 with a conventional modem 37 or other communications device that can convert the stored information into a format that is compatible for transmission through an electronic communications network, such as the internet 40. As is well known, the Internet 40 is a digital electronic communications network that connects computer networks and organizational computer facilities around the world. Access to the Internet 40 can be easily obtained in most locations through the local telephone lines or by similar means.

The system 30 of this invention may be used to track and manage a plurality of assets 31 located at any desired physical location. Additionally, the system 30 of this invention may be used to track and manage assets 31 located at a plurality of different physical locations, as suggested by the dotted lines in Fig. 3. Each different physical location can be provided with one or more receiver 35, a local controller 36, and a modem 37 to connect the system 30 to the Internet 40.

As mentioned above, the sensed operating conditions of the forklifts 31 are intended to be transmitted to the remote analysis system 50 for analysis. Referring again to Fig. 3, it can be seen that the remote analysis system 50 includes an analysis controller 51 that is connected to communicate through the internet 40 by means of a modem 52 or similar communications device. If desired, a communications server 51a may be connected between the analysis controller 51 and the modem 52. The communications server 51a is provided to selectively receive and organize the information from each of the local controllers 36 for delivery to the analysis controller 51. The analysis controller 51 can be embodied as any conventional electronic controller that is capable of receiving the sensed operating conditions of the forklifts 31 and for processing that information in a desired manner described in detail below. Ideally, the sensed operating conditions of the forklifts 31 are used to automatically generate and analyze management reports relating to the procurement and utilization of a plurality of the forklifts 31 to maximize productivity and to reduce operating costs and administrative burdens. An input device 53 and an output device 54, both of which are conventional in the art, may be connected to the analysis controller 51.

As also shown in Fig. 3, one or more administrative controllers 55 (only one is illustrated) can be connected to the internet 40 through respective modems 56 or similar communications devices. Each of the administrative controllers 55 can also be embodied as any conventional electronic controller that can request and receive information from the remote analysis system 50 through the Internet 40. In a manner that is described in detail below, the administrative controllers 55 are provided to request and receive the management information generated by the remote analysis system 50. If desired, the local controller 36 can also function as an administrative controller 55, although such is not necessary. An input device 57 and an output device 58, both of which are conventional in the art, may be connected to the administrative controller 55.

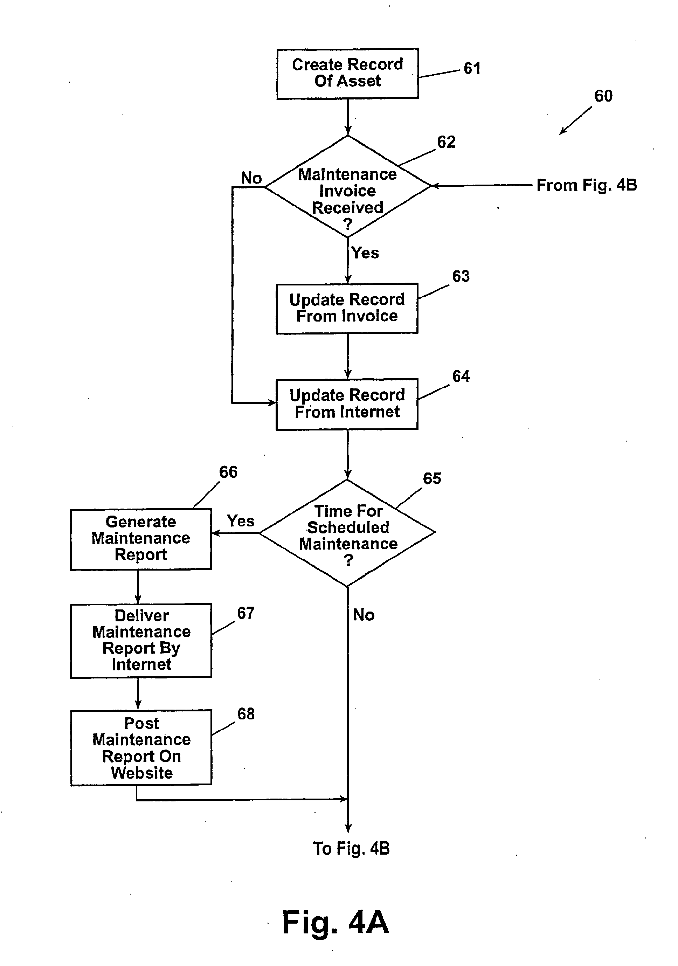

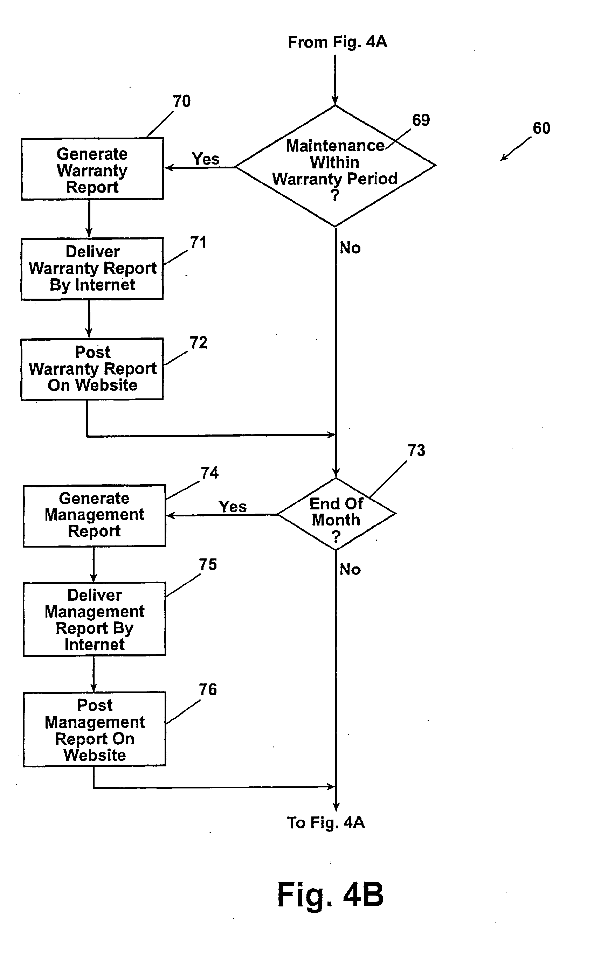

Referring now to Figs. 4A through 4C, there is illustrated a flow chart, indicated generally at 60, of a method for tracking and managing the assets 31 in accordance with this invention using the computer based system 30 illustrated in Fig. 3. Throughout this discussion also, reference will be made to a first person or entity that owns or operates the assets 31 that are being tracked and to a second person or entity that is responsible for tracking information relating to such assets 31. As above, it will be appreciated that a single person or entity may not only own and operate the assets 31, but also track the information relating thereto.

In an initial step 61 of the method 60, a record is created for each individual asset 31 by the person or entity responsible for tracking such assets, such as one of the forklifts 31 illustrated in Fig. 3. The record can be created electronically within the analysis controller 51 by means of the input device 53 and can include a variety of information that is desired to be tracked for management purposes, including all of the information described above in connection with the forklifts 11 and the analysis controller 13. Additionally, the record can further include information regarding the nature and time duration of a warranty provided by the manufacturer or supplier of the assets 31. Such warranty information can be used in the manner described in further detail below to automatically determine whether the responsibility for the maintenance being performed on the asset 31, either in whole or in part, should rest with the manufacturer or the supplier of the asset 31 or with the owner or user of the asset 31.

In a second step 62 of the method 60, it is determined whether a maintenance invoice has been received by the person or entity responsible for tracking the assets 31. Such maintenance invoices can be generated and delivered in the same manner as described above. If it is determined that a maintenance invoice has been received by the person or entity responsible for tracking the assets 31, the method branches from the step 62 to a step 63, wherein the record contained in the analysis controller 51 relating to the particular asset 31 is updated with the information contained in the maintenance invoice in the same manner as described above. Next, the method enters a step 64 wherein the record contained in the analysis controller 51 relating to the particular asset 31 is updated with information from the internet 40. Alternatively, if it is determined that a maintenance invoice has not been received by the person or entity responsible for tracking the assets 31, the method branches directly from the step 62 to the step 64.

As discussed above, the local controller 36 will have gathered and stored therein a certain amount of information regarding the individual operating characteristics for each of the forklifts 31. The local controller 37 is programmed to periodically transmit the information stored therein to the remote analysis system 50 for analysis. The analysis controller 51 can include a memory circuit for storing this information from the local controller 36. The transmission of the information from the local controller 36 to the analysis controller 51 can be performed in real time, upon occurrence of predetermined events (such as the gathering of a predetermined amount of information), or at predetermined time intervals. In any event, the record contained in the analysis controller 51 is automatically updated with the latest information regarding the status of the asset 31, without any human intervention.

Based upon the updated information contained in the record of the asset 31, the analysis controller 51 next determines whether a sufficient period of time or usage has elapsed as to trigger the performance of periodic routine maintenance for that asset 31. This determination can be made in the same manner as described above in connection with 24 of the prior art method 20. If it is determined that a sufficient amount of elapsed time or amount of usage had occurred, the method 60 branches from the step 65 to a step 66, wherein an electronic maintenance report is generated. The electronic maintenance report at 66 can include information relating to user authorization, certification, and training, as generally described in greater detail below. If desired, a hard copy of the maintenance report can also be generated by an output device 54 connected to the analysis controller 51. Then, in step 67 of the method 60, the electronic maintenance report generated in the step 66 is delivered from the person or entity responsible for tracking the asset 31 to the person or entity that owns or operates the asset 31 through the Internet 40. As above, the maintenance report can advise the person or entity that owns or operates the asset 31 that the time has arrived for the performance of periodic routine maintenance. Moreover, if a specific fault code has been generated, that can be provided as well. Alternatively, the maintenance report 55 can be delivered to a specialized maintenance organization responsible for maintenance of the assets 31. The electronic maintenance report can, for example, be delivered through the Internet 40 to one or more of the administrative controllers 55 as desired. Alternatively, or additionally, the electronic maintenance report can be delivered through the Internet 40 to one or more of the local controllers 36. Also, in step 68 of the method 60, the electronic maintenance report generated in the step 66 is posted on a website maintained on the Internet 40. The website may be maintained either by the person or entity responsible for tracking the asset 31 or by the person or entity that owns or operates the asset 31 through the Internet 40. As opposed to the direct electronic delivery of the maintenance report to a particular person or group of persons contemplated in the step 67, the step 68 contemplates that the maintenance report is made available to such person or group of persons at their request over the Internet 40.

Thereafter, the method 60 enters a step 69, wherein it is determined whether any maintenance that has been performed on the asset 31 occurred within the warranty period provided by the manufacturer or supplier. Alternatively, if in the step 65 of the method 60, it was determined that a sufficient amount of elapsed time or amount of usage had not yet occurred, the method 60 branches directly from the step 65 to the step 69. In either event, this determination can be made by comparing the date of service or amount of usage of the asset 31 with the warranty information contained in the record for that asset 31 contained in the analysis controller 51. If it is determined that service on the asset 31 occurred within the warranty period, the method 60 branches from the step 69 to a step 70, wherein an electronic warranty report is generated. If desired, a hard copy of the warranty report can also be generated by the output device 54 connected to the analysis controller 51. Then, in step 71 of the method 60, the electronic warranty report generated in the step 70 is delivered from the person or entity responsible for tracking the asset 31 to the person or entity that owns or operates the asset 31 through the Internet 40. As above, the warranty report can advise the person or entity that owns or operates the asset 31 that the service performed on the asset 31 should be paid for by the manufacturer or supplier of the asset 31. The electronic warranty report can, for example, be delivered through the Internet 40 to one or more of the administrative controllers 55 as desired. Alternatively, or additionally, the electronic warranty report can be delivered through the Internet 40 to one or more of the local controllers 36. Also, in step 72 of the method 60, the electronic warranty report generated in the step 70 is posted on a website maintained on the Internet 40. The website may be maintained either by the person or entity responsible for tracking the asset 31 or by the person or entity that owns or operates the asset 31 through the Internet 40. As opposed to the direct electronic delivery of the warranty report to a particular person or group of persons contemplated in the step 71, the step 72 contemplates that the warranty report is made available to such person or group of persons at their request over the Internet 40.

Thereafter, the method 60 enters a step 73, wherein it is determined whether a predetermined period of time has elapsed to generate a periodic management report covering some or all of the assets 31 being tracked. Alternatively, if in step 69 of the method 60, it was determined that a sufficient amount of elapsed time or amount of usage had not yet occurred, the method 60 branches directly from the step 69 to the step 73. In either event, such management reports are typically generated on a monthly basis. Thus, if the end of the month has occurred, the method 60 branches from the step 73 to a step 74, wherein an electronic management report is generated. The electronic management report at 74 can include information relating to user training, certification, and authorization, as generally described in greater detail below. If desired, a hard copy of the management report can also be generated by the output device 54 connected to the analysis controller 51. Then, in step 75 of the method 60, the electronic management report generated in the step 74 is delivered from the person or entity responsible for tracking the asset 31 to the person or entity that owns or operates the asset 31 through the Internet 40. As above, the management report can advise the person or entity that owns or operates the asset 31 of the same information as the management reports discussed above. The electronic management report can, for example, be delivered through the Internet 40 to one or more of the administrative controllers 55 as desired. Alternatively, or additionally, the electronic management report can be delivered through the Internet 40 to one or more of the local controllers 36. Also, in step 76 of the method 60, the electronic warranty report generated in the step 74 is posted on a website maintained on the Internet 40. The website may be maintained either by the person or entity responsible for tracking the asset 31 or by the person or entity that owns or operates the asset 31 through the Internet 40. As opposed to the direct electronic delivery of the management report to a particular person or group of persons contemplated in the step 75, the step 76 contemplates that the management report is made available to such person or group of persons at their request over the Internet.

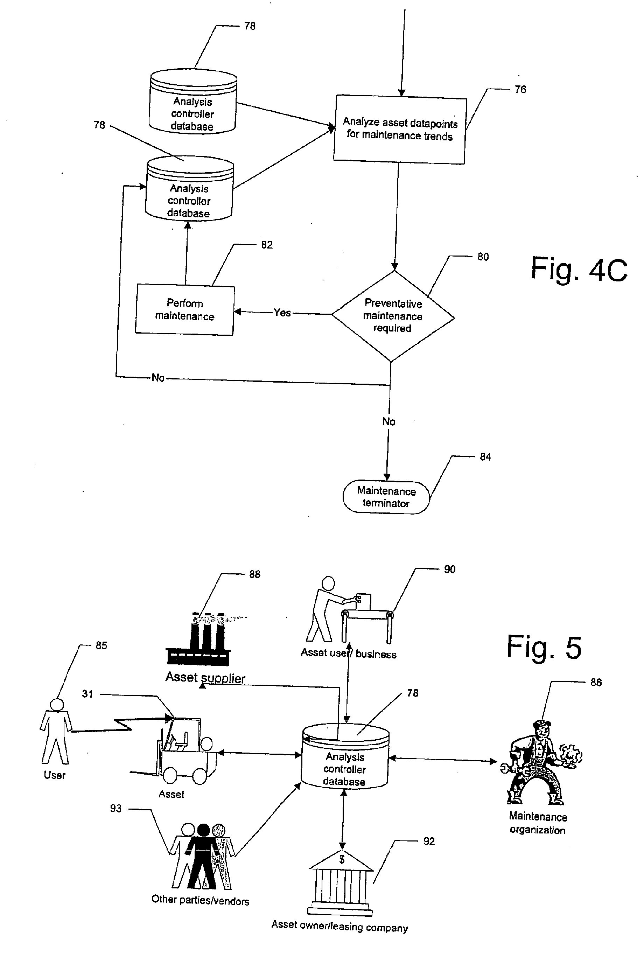

Fig. 4C demonstrates an additional functional aspect of method 60 using the inventive system. In addition to determining whether a maintenance invoice has been received, if scheduled maintenance has been performed, and determining the party responsibility for certain maintenance activities, it is possible to poll asset data points at point 76 from an analysis controller database 78 associated with one or more discrete analysis controllers 51 that may be associated with one or more businesses. A plurality of databases 78 is shown. One or more separate databases may be combined to form a logical database 78. When a maintenance organization has access to various asset fleets of the same type or make of equipment, it may be beneficial to analyze the relevant information using a larger available knowledgebase of information to analyze appropriate trends. By analyzing the data points, certain maintenance trends can be analyzed and problems can be anticipated before they affect asset utilization. For example, if it turns out that asset 31 has a tendency to need new batteries after a certain period of usage; the need for such batteries can be anticipated and stocked on site when appropriate to facilitate maintenance. As shown in Fig. 4C, once the various trends have been analyzed for assets 31, at decision point 80 it is determined whether preventative maintenance is required. If it is required, the maintenance is performed as shown at point 82 and the information is stored in database 78. The asset data points are then analyzed again until it is determined that no further preventative maintenance is required. Then the system terminates at point 84. Thus, figures 4A through 4C illustrate the use of critical information from assets 31 to perform maintenance and to provide a methodology for providing access to information by various third parties.

There are a number of significant advantages to having appropriate access to and the ability to analyze data associated with an asset 31 and the interaction of various parties with that asset. Fig. 5 illustrates the beneficial interrelationships that promote efficiency by having the various parties associated in some way with an asset 31 in one or two-way communication with analysis controller 51 either by way of administrative controller 55, reports 71 or 75, web site postings electronic mail, or the like. As illustrated, a maintenance organization 86, an asset manufacturer or supplier 88, asset user/business 90, and asset owner/leasing company 92 all at least provide information to analysis controller database 78 of analysis controller 51. Both an individual user 85 and the asset 31 itself also provide data as illustrated in the figure and discussed herein. Therefore, at the very least each party is required to contribute pertinent information concerning its interaction with an asset 31 to database 78 of asset controller 51, where the information is available for further consideration and analysis.

As already discussed above, asset 31 provides usage and performance data that is stored in asset controller 51 according to certain predetermined criteria important for that asset including such things as asset location, model, age, usage, and maintenance status. Once relevant data is collected, it is possible to analyze utilization of a specific asset 31. It is also possible to analyze a class of assets 31 using one or more types of available data. From such an analysis, best mode practices can be developed with respect to asset utilization including preventative maintenance and a determination of the extent of optimum asset use. More specifically, for example, a business 90 may decide to standardize its fleet of assets, replace specific assets that have demonstrated unreliability, and either upsize or downsize a fleet to maximize safe asset utilization.

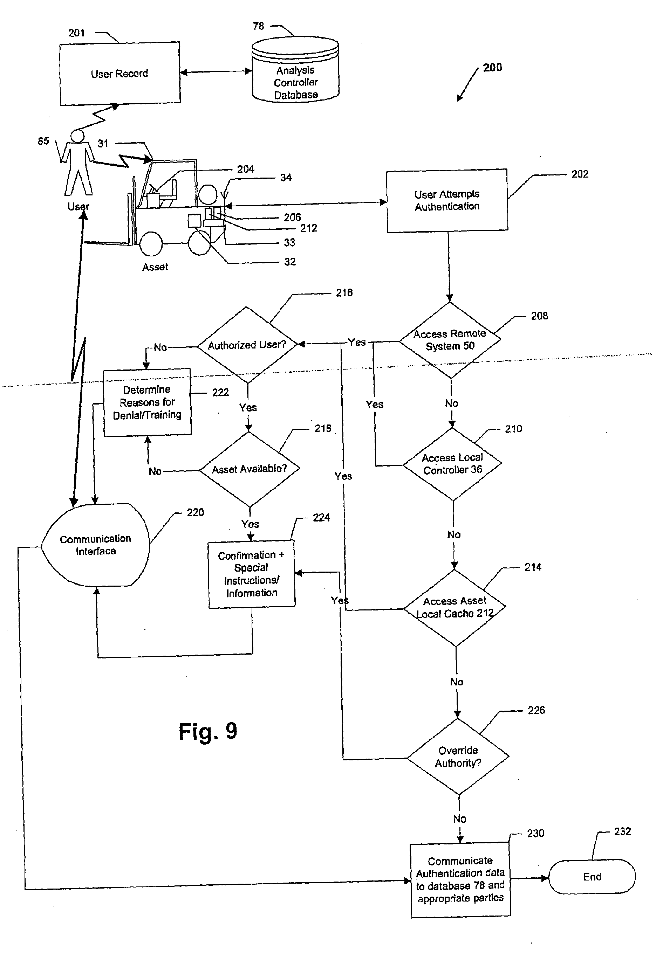

As discussed in greater detail with respect to Fig. 9 below, utilization of asset 31 by an individual user 85 is also tracked. A review of the available data can also provide detailed information on the interaction of a business 90 or individual users 85 with assets 31 as opposed to other businesses or users. From such an analysis it is possible to consider training issues, certification, and issues related to particular individuals, whose actions can have significantly influence asset utilization.

The role of other vendors such as part distributors, an example of another vendor 93, and maintenance organizations 86 can be compared with respect to other parties in similar roles or historical data to determine their effectiveness. While business 90 may provide its own maintenance of assets 31, a separate maintenance organization 86 is in the illustrated embodiment.

A vendor may be penalized or rewarded depending on the results of its activities, providing increased incentives to promote efficiencies. With respect to asset manufacturers or suppliers 88, it is possible to compare assets provided by different parties 88 to determine how well their assets perform in practice. Thus, warranty issues, maintenance costs, lost operation time, and the like can be determined from an analysis of asset information over time or involving different manufacturers to provide guidance on how assets 31 from a particular manufacturer perform in different environments and as compared to competing assets of other manufacturers or suppliers in that environment.

More specifically, for an asset manufacturer or supplier 88, warranty information as shown by steps 70 through 72 of Fig. 4B is of particular interest. While it may not be appropriate for a supplier 88 to be able to alter information in database 78, the ability to quickly and accurately collect information concerning warranty obligations and the like is of particular benefit to all of the parties. For example, warranty issues may be caught more quickly, ultimately reducing asset cost and operation while simultaneously promoting asset up time.

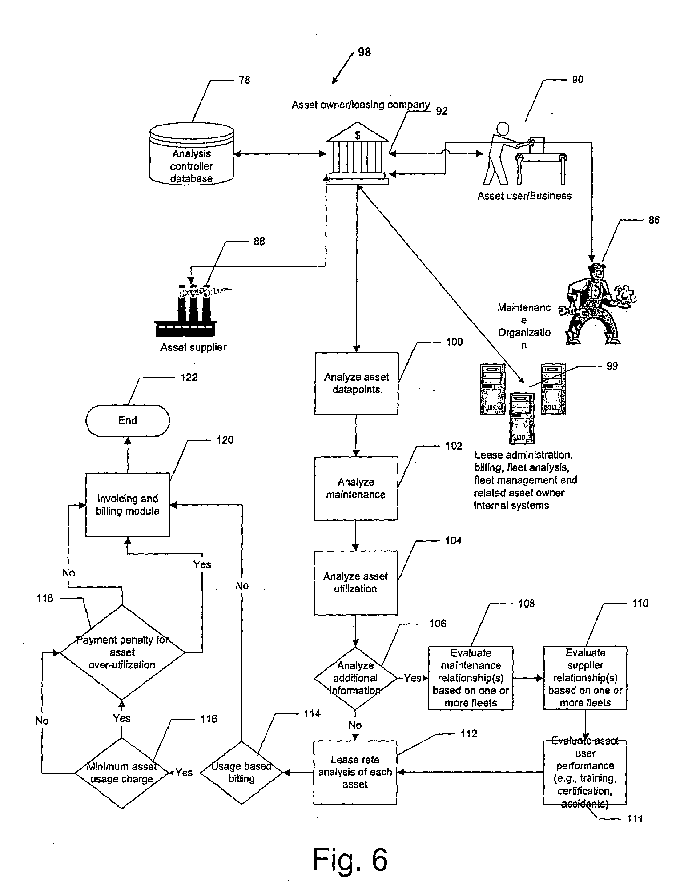

The advantages of an asset owner 92 having at least one and possibly two-way access to the real-time and historical information stored in analysis controller database 78 as well as the ability to communicate with supplier 88, maintenance 86, and business 90, is illustrated in subsystem 98 illustrated in Fig. 6. It is assumed for the discussion that follows that the owner of the asset 31 is a separate asset owner 92 such as a leasing company, as opposed to business 90 itself, although this is not a requirement of the invention, subsystem 98 is often activated by the asset owner 92 using data from database 78, but typically utilizing its own lease administration and billing systems. In many cases it is also using its own fleet analysis and management systems, which are typically aggregating information from a number of different fleets associated with a plurality of businesses 90. These various systems, one or more of which may be used independently or in concert, are collectively shown at point 99. As noted above, web-site access, generated reports, analysis controllers 51, and administrative controllers 55 provide exemplary access points for pulling asset information from system 30.

An asset owner 92 and an asset user such as business 90 share the common interest in maximizing efficiency by taking into account such variables as asset usage and asset costs. The more information that is available, the more likely that efficiency is maximized. In traditional leasing relationships involving non-fixed or movable assets such as forklifts where minimal asset utilization information is available, the burden of determining the point of maximum efficiency typically rests with business 90, since it has control over the asset. Therefore, a leasing company 92 typically enters into a lease arrangement where a fixed lease amount is paid in periodic payments by business 90 over the life of the lease. At best, only minor flexibilities are provided. When leasing company 92 regains control of an asset 31 at the end of the lease term, there is uncertainty concerning the condition of the asset. This uncertainty also typically rests with business 90 in the form of a financial cushion incorporated into the leasing relationship.

However, such uncertainty is minimized in the present invention. As shown at point 100, asset owner 92 is able to analyze the various desired objectively generated asset data points associated with an asset 31. As noted above, these data points can include the time of asset usage within a fixed time period, distance traveled, and certain performance parameters associated with the particular asset (e.g., hydraulic system usage or fork usage for fork lifts). As noted above, in practice, for industrial assets the time of use is the most important single data point. Then, as shown at point 102, asset owner 92 may analyze maintenance considerations. For example, a major routine overhaul as compared to a system failure can be analyzed. Then at point 104, the asset owner 92 can compare the raw data from the asset with maintenance conducted during the same time period. By comparing the raw data with maintenance considerations, the owner is able to analyze the asset utilization under the control of business 90 if maintenance organization 86 and supplier 88 are different third parties. For example, the asset owner 92 can determine that an asset 31 has been used very little during the time period, even allowing for maintenance. Alternatively, the owner may determine that the asset is being used continuously when not undergoing maintenance, possibly suggesting that additional assets may be appropriate to reduce overall maintenance stress on the pre-existing asset.

Additional information can be analyzed by the asset owner as shown at decision point 106. Typically, the information includes data associated with other parties having access to database 78. As shown at point 108, for example, the asset owner 92 can evaluate the maintenance relationship with maintenance organization 86. If the relationship has been very positive, an appropriate incentive may be provided to the organization in the form of shared cost savings. Alternatively, if the relationship has been negative, an appropriate penalty may also be implemented. The same considerations are available if business 90 acts as its own maintenance organization 86.

Similarly, the asset owner 92 may evaluate its relationship with the asset supplier 88 as shown at point 110. The information may affect asset payments from the owner to the supplier or the future relationship of the parties.

A further evaluation, shown at point 111, may include an analysis of individual users 85 themselves associated with a specific business 90 and their interaction with particular assets 31 or classes of assets, and such things as training level, certification, accident rates, and the like as discussed with respect to Fig. 9 and authentication subsystem 200 below.

One of the key advantages of the present invention is the ability to take data concerning any asset 31 and the interaction with that asset by any party, including user 85, maintenance organization 86, asset manufacturer or supplier 86, business 90, asset owner 92, or other parties/vendors 93. Moreover, groups of assets may be combined. Thus, it is possible to analyze data to identify the cost of owning or using any asset 31 and the productivity of that asset. Moreover, based on an adequately large statistical universe of data it is possible to benchmark asset utilization and cost against others in similar circumstances to identify best practices. Thus, it is possible to efficiency can be maximized while simultaneously minimizing unwanted waste by identifying time and cost saving opportunities. It is also possible to determine those parties providing best practice services with respect to asset utilization (e.g., maintenance) so that their services can be expanded and appropriate recognition given for their efforts. Alternatively, it is possible to identify parties providing unacceptable services so that appropriate remedial action may be taken (e.g., a user 85 has inadequate training to properly use an asset so additional training needs to be provided).

In practice, the present invention provides a business 90 with a report screen showing information regarding the fleet associated with that business. Business 90 compares its current fleet information with its own historical information or pertinent information from unnamed companies in the same general industry. A side-by-side comparison will be provided, thereby providing a business 90 or the asset owner 92 with guidance on how to improve fleet utilization using the best practices comparison.

These various advantages are applicable even if asset owner 92 and business 90 are the same entity. However, more typically with industrial equipment, asset owner 92 is different than asset user 90, where the two parties have entered into a lessor/lessee relationship. In such a case, the information in database 78 may be used to mutually maximize the relationship between the asset owner 92 and the business 90. With appropriate safeguards asset owner 92 may be willing to share in a greater portion of the risk associated with the utilization of asset 31 in determining a lease rate based on an analysis of each user fleet or individual asset as shown at point 112. Most significantly, rather than entering into a traditional fixed lease amount as noted above, asset owner 92 may be willing to enter into a hybrid lease arrangement wherein the lease charge may be a combination of one or more of the following elements: 1) a minimum payment that has to be made if asset utilization is below a pre-determined minimum threshold; 2) a usage based-payment that is made if usage is above the pre-determined minimum threshold and below a pre-determined maximum threshold; 3) a penalty payment or surcharge is made if utilization is higher than the predetermined maximum threshold; and 4) payments/rewards based on incentive issues such as asset re-allocation or timely maintenance.

The decision of whether to use usage-based billing based on one or more objective criteria based on an analysis of asset utilization is shown at decision point 114. The decisions to charge either a minimum payment if a certain usage level is not met, or to charge a usage penalty above a maximum appropriate usage level, are shown by decision points 116 and 118 respectively. Thus, a variable-amount lease may be developed based on an analysis of objective criteria that is based in large part on the actual portion of an asset's life that is consumed by the asset user (e.g., usage hours). In a preferred embodiment, the analysis is based on a pre-determined usage/pricing matrix in combination with actual usage for a specified time period. Once a level of maximum efficiency has developed, leasing will typically be primarily, if not solely, based on asset usage billing.

Through the use of the innovative leasing arrangement based on improved information availability to asset owner 92, the expenses of an asset user such as business 90 can be more accurately aligned with usage and asset value consumption. More operational flexibility is provided to business 90. When leasing is based predominantly on asset usage billing, a business 90 is able to adopt true off-balance sheet financing (i.e., the business is not required to note a financial obligation even in the footnotes of various financial reports as opposed to standard off-balance sheet leasing where a company must disclose the lease in footnotes even if the lease does not show up on the balance sheet). At the same time, asset owner 92, can collect information from a variety of sources to maximize its relationships with its own vendors and customers to the benefit of all related parties by minimizing inefficiencies and providing appropriate accountability with maximum accuracy and validity tied to a minimal likelihood for mistakes, misinformation, or even fraud.

These various factors can be adjusted dynamically by the asset owner 92 as a knowledge base is collected within its internal systems 99 and based on the actions of the other related parties. For a sophisticated asset owner with numerous fleets, it can conduct appropriate analyses over all of its fleets to determine certain trends, which it may advantageously use.

For example, if supplier 88 or maintenance organization 86 is responsible for abnormally low asset utilization as opposed to actions within the control of business 90, then the risk associated with these possibilities can be shared between asset owner 92 and various affected businesses 90 and transferred in some fashion to the responsible party. Thus, in a more preferred embodiment of the invention, asset usage is adjusted for maintenance considerations if business 90 is not responsible for its own maintenance.

As shown at point 120, once the readily available information is analyzed in view of the business relationship between an asset owner 92 and a business 90, an invoice and billing module associated with the asset owner's own internal systems 99 is invoked that generates an appropriate invoice that is sent by the asset owner to the business for payment and subsystem 98 terminates at point 122. In a preferred embodiment, once subsystem 98 is developed for a particular situation, and in the absence of an extraordinary event, invoicing is automated based strictly on the objective criteria developed with minimal outside involvement.

A key advantage of the present invention is that real-time data is collected by data acquisition device 34 and timely transmitted to local controller 36 for transmission to database 78 of analysis controller 51. If incomplete or limited data representing only a small portion of the appropriate asset data points are transmitted, then appropriate decisions cannot be made to maximize asset utilization. For example, in the case of forklifts, both time of usage and distance traveled help provide information concerning asset utilization and maintenance considerations.

Thus, the computer based system 30, including subsystem 98, of the present invention provides a superior method for tracking and managing the assets 31 than the prior art system 10. First, by providing the assets with the data acquisition devices 32 and the communications system 33 and 34, the operational characteristics and other information regarding the assets 31 is automatically sensed and transmitted to the analysis controller 51 on a real time basis, without requiring human intervention or assistance. Second, the analysis controller 51 is programmed to analyze such information as it is received and to automatically generate maintenance and warranty reports in response thereto. Third, all of the reports generated by the analysis controller 51 are automatically delivered to the appropriate persons through the Internet 40, either directly to one or more of the administrative controllers 55 or by posting on a web site, electronic mail or similar mechanisms. Fourth, as shown by subsystem 98, the information can be used to maximize asset usage efficiency. As a result, the computer based system 30 facilitates the gathering, analyzing, and delivering of information relating to the procurement and utilization of the assets 31 so as to maximize productivity and to reduce operating costs and administrative burdens to the benefit of all parties having a relationship with the asset and an interest in its performance.

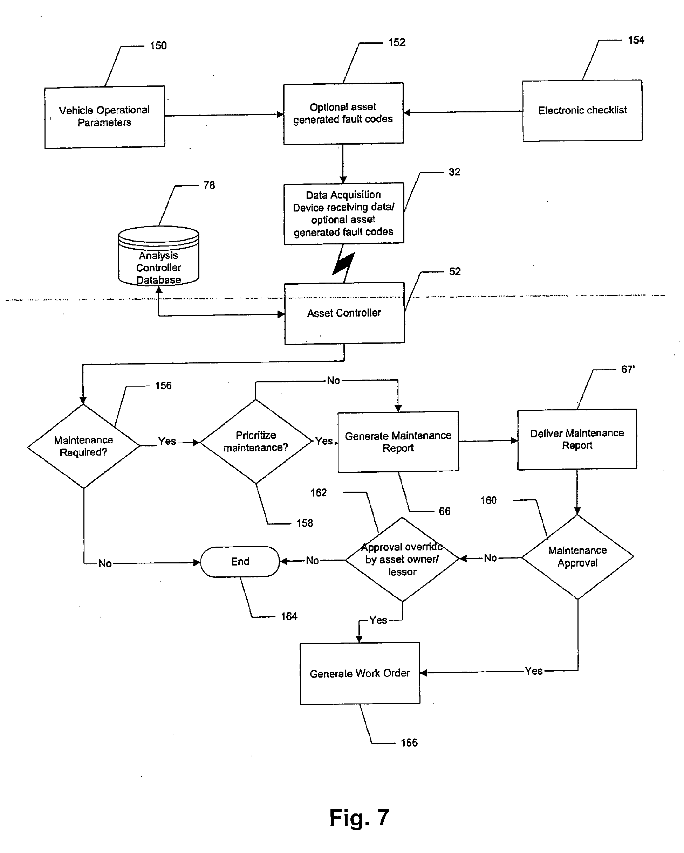

The providing of maintenance to an asset 31 is illustrated in further detail in Fig. 7. In addition to determining whether it is necessary to provide scheduled maintenance as noted at step 65 of Fig. 4A, changes in operational parameters associated with asset 31 as shown at point 150 may result in the generation of a specific fault code if a maintenance problem is detected that requires a more expeditious response. The fault code may be generated by the asset itself using one or more sensors associated with operational parameters of asset 31 as shown by point 152 and communicated to the data acquisition device 32. In addition, analysis controller 51 may analyze the raw operational data received from the asset 31 and compare it with analysis controller database 78 including the history of the specific asset 31 as well as the history of similar assets from which maintenance trends may be determined as discussed with respect to Fig. 4C above. Based on an analysis of such trends, proactive lower cost maintenance can be timely performed that results in the avoidance of higher cost maintenance at a later date, which happens in the absence of real-time information available for review and analysis.

A fault code may even be generated based on the actions of the asset operator. In a preferred embodiment of the invention, an electronic checklist 154 is completed by the asset operator on a regular basis, which may include information concerning asset performance that is more detailed than that available from a review of raw operational parameters. In accordance with OSHA requirements, for example, at the end of each shift, a forklift operator must complete a checklist concerning the performance of the asset during the shift. Some of the questions associated with checklist 154 are directed to maintenance issues. Therefore, in a preferred embodiment of the invention, checklist 154 would be completed electronically at the asset 31, and transmitted by way of the data acquisition device 32 to analysis controller 51 as discussed above. The information would be analyzed to determine if an OSHA/repair need is identified. Preferably, the analysis is automated in accordance with a comparison of the operational status with pre-determined rules. For example, if a question asks if there is a hydraulic leak for a forklift and the answer is "yes", then maintenance would be appropriate.

Once it is determined that maintenance of some type is required as shown at point 156 based on an analysis of the operational status of asset 31, a maintenance report 66 is generated as also shown in Fig. 4A and made available electronically at point 67' such as by the Internet or by posting on a website as also shown in Fig. 4A. The use of electronic mail, or the providing of real-time access to the raw data stored within database 78 by the maintenance organization 86, shown in Fig. 5, is also possible to generate the maintenance report 66. An advantage of providing a maintenance organization 86 real-time access to the raw data representing the operational status of asset 31 is that it may develop specialized analysis tools based on its own expertise in maintenance, resulting for example in the creation of specialized rules for use in automatically analyzing raw data in determining whether maintenance is required, minimizing the need for manual review and determination.

In a preferred embodiment, the priority of the proposed maintenance required 158 is noted on the maintenance report. For example, critical maintenance issues should take precedence over routine issues. Moreover, the system generally institutes an approval process as shown at point 160. For example, if the proposed maintenance is related to warranty work such as noted with respect to step 69 of Fig. 4B, the manufacturer or supplier should approve the maintenance. If a lessee is responsible for the proposed maintenance, it should approve the maintenance before it is performed. In some cases, the maintenance organization 86 itself approves the maintenance, such as when it has a contract that involves pre-payment of particular maintenance. Finally, as shown at point 162, in some cases it may be desirable to have the lessor or owner of the asset have the ability to review and override any refusals to perform maintenance since it has the ultimate responsibility for asset 31. If no approvals are given, the process is terminated at point 164. A review of any automated rules that generated a request for maintenance approval may also be appropriate. When maintenance approval is rejected, any automated rules that generated the original maintenance request can be fine-tuned by including the results of the approval process. Over time, almost all maintenance requests should be generally approved. Information regarding approval is stored in database 78.

For preventative maintenance, it is expected that pre-apprpval will generally be granted by the necessary parties based on prior agreement as to the nature and timing of such maintenance.

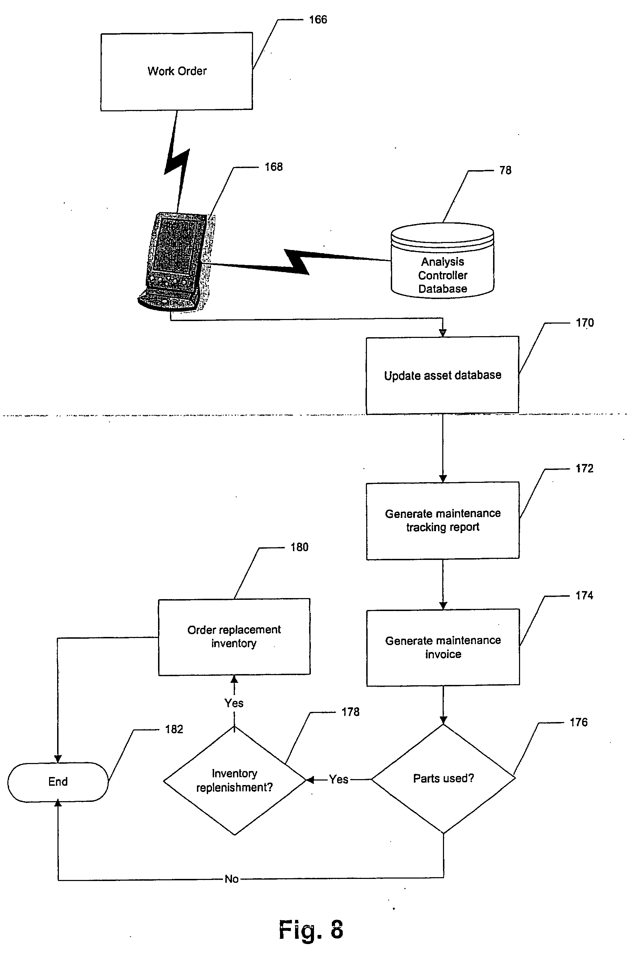

Once maintenance has been approved, a work order 166 is generated. As shown in Fig. 8, work order 166 is sent electronically to appropriate maintenance personnel that contains all of the critical operating data-required to effectively schedule and carry out the maintenance. Typically, for example, the data includes hour meter reading, any fault codes, asset identification criteria, operator of record, contact information, and asset location. Moreover, based on information contained within the fault code or retrieved from the knowledgebase, information concerning anticipated parts may also be provided as well as the nearest location from where they may be retrieved (e.g., at a customer location, or from a local servicing dealer). Finally, the work order 166 preferably contains the past recent history of the particular asset 31 so that the mechanic can use this information to expedite maintenance.

In a preferred embodiment of the invention, the work order 166 is transmitted electronically to a handheld device 168 associated with specific maintenance personnel assigned to carry out the maintenance. Device 168 includes an appropriate graphical user interface (GUI) that permits the receiving and transmitting of both alphanumeric and graphical based information. Examples of hand held devices include a variety of systems produced that use either the Palm® operating system from Palm, Inc. or a sub-set of Microsoft® Windows® from Microsoft Inc. Moreover, in a more preferred embodiment of the invention, the hand held device 168 is in real-time two-way communication with analysis controller database 78. Thus, under appropriate circumstances the handheld device 168 can access such things as dealer billing systems, inventory listings, customer work order approval records, and fleet management information. Rather than having the work order include the past recent history of the asset 31 to be serviced, it is possible to use the two-way communication link to request the necessary history when advantageous to do so.

Once the maintenance is completed, handheld device 168 is used to update database 78 as shown at point 170, including labor information and an identification of any parts required to effect a repair. If not already clear based on the contents of database 78, the inventory location from which any parts were pulled should also be provided. Ideally, the information is transmitted on a real-time basis from the handheld device 168. Alternatively, however, the information can be transmitted upon routine synchronization of the handheld device with database 78. It is also possible to manually enter the information into the database 78.

The maintenance information is passed to database 78 where it may be used to generate maintenance tracking reports 172, and comprehensive invoices 174 listing both labor and part costs. Since the information is integrated with pre-existing asset information, no rekeying is required. Moreover, as noted above with respect to Fig. 4C, the complete maintenance history of a particular asset or class of assets may be reviewed and analyzed in detail for specific trends of interest.

In addition, when parts are used, as shown at point 176, system 30 preferably permits comparison of the parts used with existing inventory for the specified parts storage location. Based on maintenance trends associated with a class of assets 31 or a specific asset 31, it is possible for the system to automatically order replacement parts for an inventory location if the number of parts in a particular inventory fall below a pre-determined threshold as shown at points 178 and 180. The threshold is calculated at least in part based on an analysis of the prior maintenance of both the asset 31 and the class of assets associated with the asset. Other factors may include the age of the class of assets, the time of the year, usage trends and the like. As one example, in the winter different parts may be required as opposed to in the summer. As another example, more tires may be required for a forklift asset if a number of the assets are reaching a preventative maintenance stage where tires have to be replaced. The system terminates at point 182.

It is also possible to provide online copies of parts catalogs including part numbers and exploded views of parts, including to hand held device 168. In some cases a comparison table of equivalent parts may be provided to reduce part acquisition timing or cost. Moreover, system 30 preferably keeps track of part availability and cost throughout a parts availability network. Thus, no one party is required to keep as many items in stock since ready access to items stored at a different location is possible. Transaction costs in locating and requesting items from different locations is minimized since the information is readily stored and accessible from system 30. Item stock reduction at any one location is also possible for the reasons discussed above where careful quantity controls are implemented.

Under some circumstances it may even make sense to have a central parts depository with inventory actually held and controlled by a third party such as a courier service. For example, the courier service can ship parts as needed to effect a repair or replenish a reduced inventory at a remote location. With a central depository, the cost of maintaining the inventory can be borne by the party having the best ability to do so. For example, if an asset owner 92 has many businesses 90 using a class of assets 31, it may be able to provide economies of scale to the businesses by being responsible for ordering and stocking inventory parts for use by all affected businesses. Non-related businesses may also be provided access to a part inventory at a higher cost, giving them a further incentive to actively participate in system 30 to enjoy improved economies of scale. Thus, system 30 provides enhanced customer service through reduced cost and a more efficient part access and ordering process.

Inventive system 30 provides a number of additional advantages for maintenance. For example, through the use of electronic information transmission and analysis, maintenance information is transferred and available real-time for review and for the initiation of necessary actions such as approval, the tracking of performed maintenance, the ordering of replacement parts to replenish depleted inventories, and automatic invoice generation. Since asset 31 communicates its own maintenance needs in consultation with an appropriate knowledgebase associated with database 78, human intervention is minimized. As more information is gathered over time, the scheduling of preventative maintenance can be optimized to eliminate either too little or too much maintenance. Further, system 30 automates a very paper-intensive and time cumbersome process by permitting direct communication with the various information elements associated with an asset 31. As a result, the flow of data is more effectively controlled, dispersed, routed, monitored, and acted upon. In practice, the number of people involved in the maintenance process can often be reduced while the speed of providing maintenance can be increased. Thus, potential downtime and related performance issues can be more timely addressed.

A further aspect of the invention, authorization subsystem 200 within system 30, is illustrated in Fig. 9. Authentication to access an asset 31 is tied to pre-determined rules. Specifically, authorization subsystem 200 keeps track of all individual users 85 using an asset 31. It prevents asset utilization by uncertified users 85. System 30 may require that a user 85 be trained or certified to utilize certain assets 31. Even if trained or certified, system 30 may only allow a user 85 to access an asset 31 for a limited period of time within a pre-set time range (e.g., OSHA or other work regulations may only permit access for ten (10) hours within every twenty-four (24) hours). Further, authentication may be denied if a user 85 is found to have too many accidents. By tracking regulation requirements, training or certification issues and even accident rates, an asset 31 is more likely to be well maintained and well utilized. As a result, there are reduced operating costs, minimized potential fines through enhanced regulation compliance, and prolonged asset life through appropriate usage.

Apart from user 85, maintenance considerations may make an asset 31 unavailable. If critical maintenance is required, the unavailability of an asset 31 may prevent unwanted problems resulting from inappropriate continued use, again reducing operating costs and extending asset life.

In other situations, authorization subsystem 200 is essentially a beneficial subscription service. For example, a single asset 31may be available to different users at pre-set times based on a reservation system, which is tracked through authentication subsystem 200. A prior reservation may take precedence over a desire to use an asset without such a reservation. Alternatively, access to an asset 31 may be terminated if payments to a third party such as maintenance organization 86, asset supplier 88 or asset owner 92 are in arrears. Of particular benefit, even when authorizing access, the ability to track usage with respect to a particular user 85 permits different monetary or time-based asset access rates depending on the specific user or entity associated with that user.

As shown at point 201, a record of user 85 is created that may be stored in analysis controller database 78. The information associated with user 85 preferably includes such data as a unique user code, user identification information (e.g., employer, location, address, and contact information) the number/class of assets for which the user is permitted access, safety record (e.g., number of accidents associated with each asset and over what period of total usage or time), and training or certification records.

A user attempts to access a particular asset at point 202. The access may be through the use of an access device 204 associated with the particular user (e.g., access card, magnetic key, or key pad code) and a corresponding approval device 206 associated with an asset 31 that is connected to data acquisition device 32 for authorization confirmation. In turn, as noted above, data acquisition device 32 is associated with transmitter 33, which is in selective communication with local controller 36. As shown at point 208, when a user attempts to access asset 31 for use, an attempt is first made to access remote system 50 for authorization. If communication is not possible, an attempt is next made to communicate with local controller 36 at decision point 210, which preferably includes a data cache for at least a sub-set of users 85 associated with a particular facility where an asset 31 is located. The data associated with local controller 36 may not be as up to date as that available from direct access to analysis controller database 78. In turn, if communication is not possible even with the local controller, an asset cache of data 212 associated with a particular asset 31 may optionally be available for access by approval device 206, as shown at decision point 214. Once again, the data may not be as up to date. On the other hand, at times, the data cached within asset cache 212 or local controller 36 maybe more up to date than that associated with system 50. The appropriate data is communicated between asset cache 212 and local controller 36, and then between local controller 36 and system 50, as communication between the appropriate devices takes place.

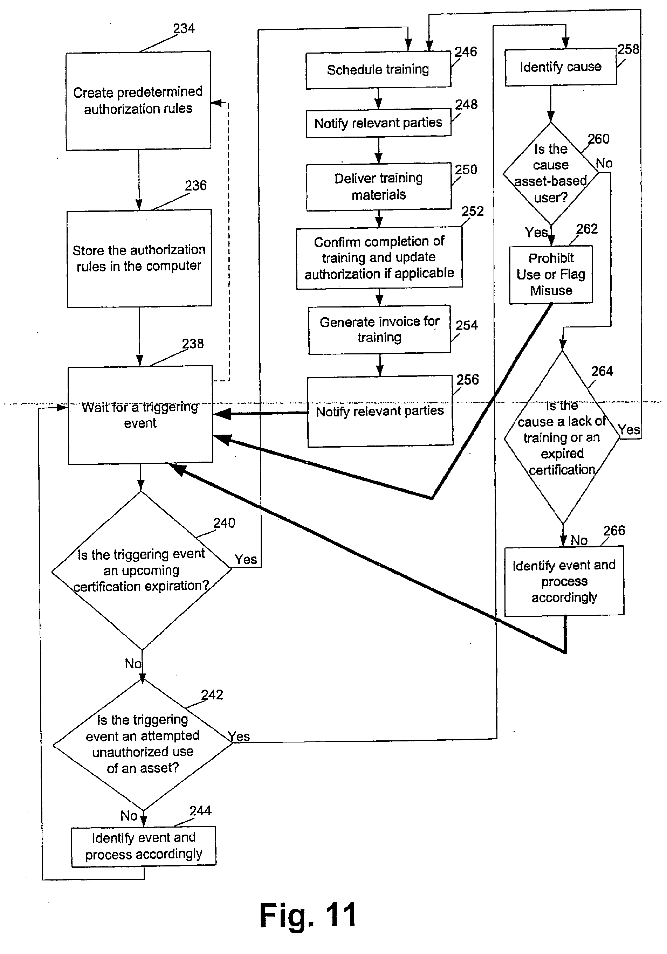

Once data related to asset 31 and user 85 is located, system 30 determines if user 85 is an authorized user for asset 31 at decision point 216, or if the asset 31 itself is available for user at decision point 218 in accordance with pre-determined rules or considerations such as those noted above. If authorization is not granted, a communication interface 220 associated with asset 31 preferably gives the reason for the denial and the steps required to obtain authorization 222. It may even be possible to use communication interface 220 to provide interactive training and certification under some circumstances. As suggested above, a communication interface 220 may even be used to complete an interactive asset checklist as discussed above before and after asset operation by each user 85. Finally, even if approval is given, confirmation as well as special instructions or information of importance to user 85, collected at point 224 (e.g., remaining access time, timing for re-training or re-certification, or next scheduled maintenance) may be displayed to the user. The ways in which the authorization subsystem 200 determines whether a user is authorized at 216 or determines asset available at 218 is described generally in greater detail below, in the discussion relating to Fig. 11.

Finally, if a user 85 is not authorized, either because of communication problems or issues associated with either the user or the asset itself, preferably some type of supervisory override, such as a master access device or code and shown at decision point 226, may be selectively implemented between devices 204 and 206 to permit asset utilization. Even if there is such an override, however, information associated with asset utilization is still recorded and communicated as taught above.

Finally, any pertinent authentication subsystem data is stored in database 78. Moreover, pre-determined rules may be established that provide automatic instructions to system 30 when such authentication subsystem data should be communicated to a third party such as a supervisor, trainer, or security personnel as a result of a user attempting to access an asset 31 as shown at point 230. For example, if a user 85 needs to have additional training, that information needs to be communicated to the appropriate party (e.g., supervisor and trainer). Training may take place using internal personnel or it may be outsourced to a vendor 93 (shown in Fig. 5) in a manner similar to maintenance, as discussed above. System 30 makes it possible to schedule training and even track the cost and corresponding benefits of training through access to real-time and historical asset or user data not generally available except in accordance with the teachings of the present invention. As another example, if unauthorized personnel attempt to use an asset 31, it may be appropriate to send an urgent message to appropriate security personnel at the location of asset 31. Finally, authentication subsystem 200 terminates at end point 232.

As shown most succinctly in Fig. 5, numerous parties have access to analysis controller database, which stores data with respect to asset 31 and various parties having a relationship to that asset. The collected data may be used or analyzed in any one of a number of different ways depending on the interests of the party. For example, a maintenance organization is interested in using the data available to improve maintenance and reduce associated costs; asset supplier 88 desires to examine and minimize warranty issues; and asset owner/leasing company 92 desires to appropriately maximize its return on investment, a desire shared with each business 90. From the perspective of an individual user 85, such issues as appropriate training and certification have also been discussed.

"What if' inquiries are particularly important to successful implementation of system 30. For example, when proposing the use of system 30 to a party such as a potential customer, the ability to analyze historical data and performance with respect to similarly situated customers is invaluable to provide a breakdown of costs and possible cost savings. As noted above, with appropriate information, an asset owner 92, such as a leasing company, may be able to share in part of the risk of asset utilization with appropriate data access and control.

To facilitate these types of analyses, it is important to have robust access to analysis controller database 78, which can actually be one or more databases of information tied together so as to be accessible for the purpose of an analysis of system 30. In a preferred embodiment, hand held device 168 or a similar type of computing device provides a desirable access point to database 78.

However, before the parties can take advantage of system 30, it is essential to create a foundational base of information that provides a framework for further analysis. Ideally, pre-created forms or templates help facilitate data collection and analysis. For example, when talking to a potential customer, it would be helpful to have access to cross-reference materials related to competitor assets, lease pricing rate factors, historical data and the like. Certain query forms can be used to collect relevant raw data and other query forms can be used to retrieve useful data based on a consideration of the raw data to provide the basis for recommended courses of conduct to promote safe utilization and efficiency while reducing costs. Thus, the actual analysis typically takes place at a central location having the appropriate computational resources with the results preferably being transmitted to hand held device 168. Under some circumstances, an analysis is possible directly on-site using the data collected and analyzed without direct access to database 78 based on a sub-set of data and logic protocols in the form of analysis tools stored on hand held device 168.

Even when not in real-time contact with database 78, hand held device 168 is often invaluable. It permits the automation of survey data entry by an account manager so that information concerning assets 31, a business 90, individual users 85, and other related parties may be entered on-site and later transferred to database 78. The use of paper forms and manual translation of information is eliminated, speeding up data entry. For example, in the past an account manager might have handled more than twenty (20) data sheets that tracked specifications of the current fleet of assets 31 for a new customer business 90. The data sheets were taken back to the office and manually entered into a local database. Simultaneously, an intermediate source of error related to manual keying or a similar translation method is eliminated.

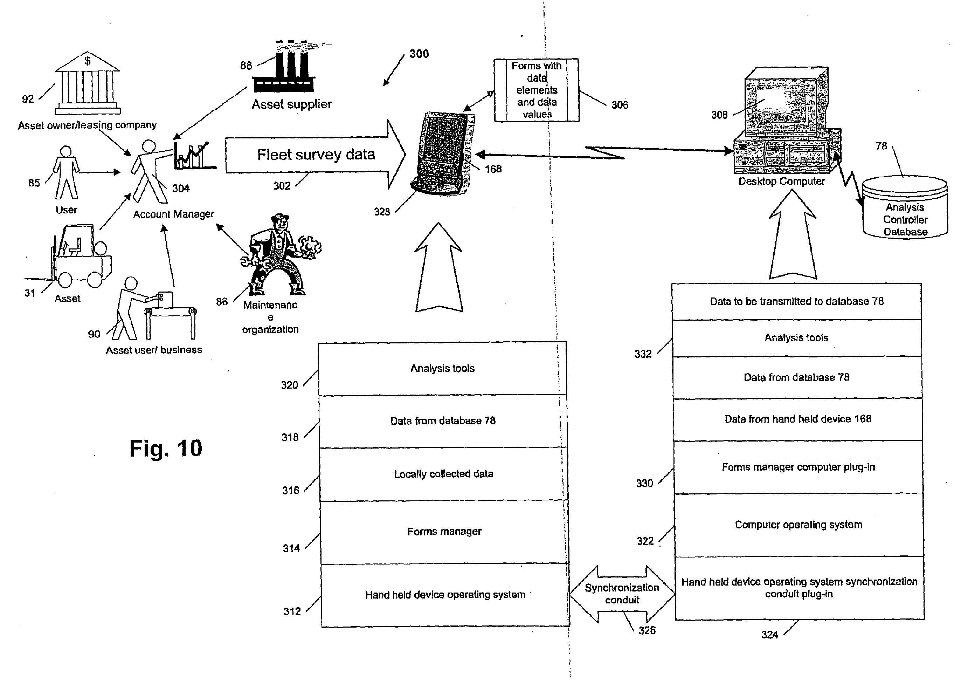

A data acquisition and analysis subsystem 300 is illustrated in Fig. 10. Subsystem 300 facilitates the collection of raw fleet survey data 302 upon initiation of system 30 by a party so that a baseline level of data may be provided to system 30 for consideration and analysis. An account manager 304 collects raw data with respect to each affected asset 31 and all parties having interaction with the asset such as the parties identified with respect to Fig. 5 above. Of course, other parties may also contribute fleet survey data if they have interaction with an asset 31. The data is preferably inputted into a handheld device 168 using pre-defined forms 306, transmitted to a desktop computer 308, and then ultimately stored in analysis controller database 78. To help with analysis of particular data, the process may be reversed, with data pulled from database 78 to desktop computer 308, transmitted to hand held device 168, and used by account manager 304 to perform a desired analysis for any affected party.

Preferably, hand held device 168 uses an operating system 312 provided by Palm, Inc. A forms manager 314 from Puma Technologies, Inc. known as the Satellite Forms software development package is used to generate data forms 306, which are used to enter the required information or display stored data from hand held 168 or from analysis controller database 78. When collecting raw data, account manager 304 follows inquiries associated with form 306 to enter required information. In contrast to manual methods, it is preferably possible to advise when inappropriate data is entered or if a field is missed. Thus, any data entry errors can be addressed on the spot when the source of the original data is readily available. Hand held device 168 stores locally collected data 316 such as fleet survey data 302, may include retrieved data 318 from database 78, and a number of different analysis tools 320 for evaluating the stored data. For example, one analysis tool 320 may use a set of rules to estimate the total life of an asset under the circumstances currently in place at a business 90 and compare them to known "best practices" for the same asset along with proposed process changes to increase asset life to reach the "best practices" level.

Preferably, computer 308 includes an operating system 322 provided by Microsoft such as Windows® 98, Windows® Millenium or Windows® 2000. It has a plug-in 324 provided by the party responsible for hand held operating system 312 to provide a synchronization conduit 326. Synchronization is handled through a conventional or USB serial data port on the desktop computer 308 and a cradle hardware device 328 associated with device 168. During use of synchronization conduit 326, data values and associated data stored on hand held device 168 and desktop computer 308 are interchanged in accordance with parameters provided in forms manager 314 and a corresponding forms manager computer plug-in 330 on desktop computer 308. Desktop computer includes data from hand held device 168, data from database 78 to either be used locally by the computer or transferred to hand held device 168, data received from device 168 or manipulated locally using one or more analysis tools 332, and data to be transmitted to database 78 for long-term manipulation or storage.

For example, when using subsystem 300 to transfer fleet survey data 302 that has been placed into hand held device 168 as locally collected data 316. The data transmitted includes both data elements and lists of value fields identifying a data source and the specific data values populating each data element. The data is then transferred to database 78 from desktop 308 in accordance with pre-determined rules. Preferably, the data is associated with fixed fields that are consistently defined between hand held device 168 and database 78 so that the data merely populates the appropriate fields within database 78 after it is transferred from the hand held device. Alternatively, the data may be uploaded into a local analysis tool 332 of desktop 308 such as a database or spreadsheet program for final manipulation and then storage in asset controller database 78.

More particularly, in a preferred embodiment of the invention an account manager 304 who is about ready to visit a business 90 determines the type of information that is relevant to be collected during the visit. Using the desktop computer, a list of values as well as data query forms are downloaded from asset controller database 78 and stored on the local desktop computer hard drive, and then transferred to hand held device 168. For example, when first taking an inventory of pre-existing assets for a new business 90, a list of valid value identifiers for forklift analysis may include the following data elements:
1) Overall customer information
2) Customer division information
3) Locations of facilities within each division where forklifts are used
4) Departments within each facility that use the forklifts
5) Broad descriptions of the types of ways or industries for which the forklifts are used
6) For each forklift:
   a) Manufacturer/Supplier
   b) Power supply type
   c) Mast type
   d) Tire type
   e) Forklift attachments
   f) Forklift type/model
   g) Forklift serial number
   h) Any label used by a customer to uniquely identify the forklift
   i) Date the forklift went into service
   j) Number of hours that the forklift has been in use according to its meter.
   k) Lease/rental contract information
   l) Maintenance history
   m) Maintenance contracts.
   n) Forklift dealer
   o) The number of months/and/or usage hours covered pursuant to the manufacturer/supplier warranty.
   p) Original purchase cost
   q) Manufacturing date
   r) Forklift condition (e.g., based on a scale such as new or used)
   s) Application rating (e.g., heavy, medium or light)
   t) Administration fees charged for providing financing/maintenance or the like
   u) Criteria providing feedback concerning the number of hours at which preventative maintenance should be performed
   v) Capacity, typically in pounds or kilograms
   w) Number of hours or shifts the forklift is used each day
   x) Number of days a week that a forklift is used

The tables are downloaded to hand held device 168 using synchronization conduit 326 and the relationship between forms manager 314 and forms manager computer plug-in 330. In practice, the transfer of data value tables and their related values has also included the use of a program written in a product called Sybase Powerbuilder from Sybase, Inc. Under such circumstances analysis controller database 78 is a Sybase database. Further, desktop computer 308 may include a different database manipulation program called DBASE acting as one of the local analysis tools to review and possibly manipulate data received from hand held device 168 or analysis controller database 78 before forwarding it to the receiving device.

The collection of fleet survey data 302 is merely an example of subsystem 300 in use. Moreover, even when an account manager 304 is collecting fleet survey data 302, it is preferred that if some of the data associated with a survey is already stored in database 78 (e.g., customer contact information, divisions, or asset locations), it is used to pre-populate appropriate forms 306 to simplify redundant data entry by the account manager. Further, if an error exists based on an inaccuracy in the pre-existing data, account manager 304 can correct it.

The collected and manipulated data provides a starting point for each asset 31 going forward as well as a base foundation for immediate asset fleet analysis since at least some historical data has preferably been collected for existing assets. Thus, even at the beginning of the utilization of system 300, the initially collected data can be analyzed in accordance with pre-existing data involving other fleets, best practices, and the like, to provide immediate guidance on how to improve current fleet utilization and efficiency. The same subsystem may be used to transfer data and recommendations back to hand held device 168, except that this time forms 306 perform a data presentation function as opposed to a query function. As suggested above, some analysis of data may be performed directly on hand-held device 168 although more sophisticated analysis tools 332 are typically associated with desktop computer 308 or asset controller 51 in view of their enhanced computational power and storage capabilities.

Subsystem 300 has been shown using synchronization. It is recognized of course, that real-time access is also possible between hand held device and either asset controller 51 or desktop computer 308 without the need to use cradle 328. An advantage of real-time access between a hand-held device 168 and database 78 is that information may be immediately transmitted and received, providing access to the full range of data values and associated data available in database 78. The uploading and downloading of pre-created data forms 306 to help facilitate the collection and analysis of data is also expedited. Further, under some circumstances real-time error checking may be available. For example, if an account manager 304 indicates the number of assets available at a physical location and the actual number in database 78 is different, the manager can be asked to undertake verification while still present at the physical location. Otherwise, to the extent that there are discrepancies, they may be considered after data synchronization takes place.

The same methodology discussed with respect to subsystem 300 may also be used by maintenance personnel as discussed with respect to Fig. 8 above. Work order 166 acts as a pre-populated form 306 transmitted to a hand held device 168. Once the maintenance is completed a different form 306 may be used to communicate the necessary maintenance labor and parts information so that a maintenance tracking report 172, invoice 174, and determination of inventory replenishment 178 may be implemented.

Fig. 11 provides a more detailed example of the authorization process that can be performed by the authorization subsystem 200. The authorization subsystem 200 or method can function independently from many aspects of the system 30. However, in a preferred embodiment of the invention, it is part of an integrated asset tracking and management system.

Before a system 30 can authenticate or authorize use of assets 31 by a user 85, the rules underlying the authentication or authorization process must be inputted or entered into the system 30. Thus, the first step in the process is the creation of the predetermined authorization rules at 234. These rules can also be referred to as asset-related authorization rules, predetermined authentication rules, predetermined asset access rules, or any other phrase signifying that the system 30 can incorporate and enforce a set of rules that potentially limit the ability of a user 85 to access an asset 31. The predetermined authorization rules at 234 can include the business policies of an organization, such as an asset supplier 88, an asset using business 90, a maintenance organization 86, an asset owner/leasing company 92, or some other party of vendor 93. The predetermined authorization rules at 234 should also include government requirements, such as regulations set forth by the Occupational Safety and Health Administration ("OSHA") and licensing and operating requirements set forth by various other governmental authorities. The predetermined authorization rules at 234 allow the system 30 to implement comprehensive policies in a systematic and consistent manner. For example, if a certain number of accidents relating to a particular user 85 should result in a user 85 being prohibited from using an asset 31, then that policy can be incorporated into a predetermined authorization rule 234. If a certain level of training is required for proper use of an asset 234, then that policy can similarly be incorporated into a predetermined authorization rule 234.

Many authorization rules fit into one of two general categories. Some authorization rules are asset-based. Asset-based authorization rules relate to limitations intrinsic to the asset 31 itself, and have nothing to do with user 85 characteristics. For example, if an asset 31 should not be used more than 40 hours in a week, the system 30 should find an attempted use after 40 hours of use to constitute an unauthorized use regardless of whether the user 85 attempting to use the asset 31 is otherwise certified to use the asset 31 or not. The system 30 can support restricting use of an asset 31 to certain hourly shifts, to certain number of aggregate hours per day, to a certain number of consecutive hours, to a certain number of monthly hours, etc. An asset-based predetermined authorization rule can preclude a particular user 85 from authorized asset access even if there are no characteristics relating to the user 85 that would justify such a preclusion. The system 30 has significant flexibility in defining the predetermined authorization rules 234.

A second category of authorization rules are user-based because those rules apply to characteristics of the user 85. User-based authorization rules relate certain user 85 characteristics (such as a particular type of forklift training) with an asset 31, such as a particular type of forklift. For example, if a user 85 is not licensed to operate a particular piece of machinery, the system 30 should classify that user's 85 attempted use of the particular piece of machinery as unauthorized even if there is no asset-based reason prohibiting use of the asset 31. User-based authorization rules related to both specific asset 31 characteristics as well as to specific user 85 characteristics. For example, user training relates to a specific type or group of assets 31. Training with regards to driving a truck is different than the training required to drive a forklift. Truck driver training may authorize a user 85 to operate a truck, but probably does not authorize a user 85 to operate a forklift. The authorization rules incorporate the various relationships between training successfully performed by the user 85 (and other user 85 characteristics) with respect to various assets and the various training requirements related to various assets.

Many predetermined user-based authorization rules will likely relate to user 85 training. Predetermined authorization rules relating to user 85 training can also be referred to as training rules, training requirements, certification requirements, user qualifications, or any other term or phrase indicating that a requirement is being set with respect to user 85 training, in order to authorize the user 85 to use a particular asset 31 or a particular class of assets 31.

Training rules preferably incorporate the concept of renewal requirements and certification expiration dates. The system 30 can be configured to automatically schedule training or re-training such that the training or re-training can be completed before the user's 85 certification expires. A warning can also be sent to the user 85, to the user's supervisor, and to other relevant parties as defined below. The predetermined authorization rules allow the system 30 to be flexibly configured with respect to the timing of these functions. For example, if it is desirable for the system 30 to look six months ahead with regards to the expiration of a particular certification, then the system 30 will schedule subsequent training accordingly by using the flexibility provided at 234. If only a four week warning period is desired for a different form of certification, that information can also be incorporated at 234. The system 30 can be configured to meet the realities of how users 85 are trained, and take into account the

The predetermined authorization rules 234 can incorporate more than training-related policies and requirements. The predetermined rules can determine whether an unauthorized user 85 should be prevented from using the asset, or whether the unauthorized use is simply flagged by the system 30 and recorded in the database 78. The predetermined authorizations rules 234 can be used to distinguish users 85 based on virtually any user-related characteristic tracked by the system 30. Accidents, safety history, seniority, performance reviews, or any other user-related characteristic can be incorporated into a predetermined authorization rule at 234. Combinations of asset-based and user-based authorization rules can be incorporated into the system 30. Certain highly trained users 85 may be authorized to use a particular machine outside its normal asset-based limits. It is possible that a machine that should not generally be used at night, can be used at night by a select class of super-users. A well trained user 85 may be authorized to use an asset longer than the asset-based daily limit would otherwise permit. Thus, asset-related characteristics can be combined with user-based predetermined authorization rules at 234. Effective customization of the system 30 requires that sufficient time and effort be applied to creating the predetermined authorization rules at 234.

After the predetermined authorization rules are created at 234, they can be stored at 236 on the database 78 that is accessible via hand held device 168 or desktop computer 308. Once saved at 236 on the database 78, the predetermined authorization rules 234 await a triggering event at 238. A triggering event is anything that could trigger a change in the certification of a user 35 or a change in the potential authorization status relating to an asset 31. Some triggering events can consist simply of the passage of time, such as the expiration of a particular certification or license. Other triggering events relate specifically to the asset 31, such as an attempt to use an asset 31 for a ninth hour in a day when the asset 31 may only be used for up to eight hours in a day. Triggering events are defined by the predetermined authorization rules. Thus, without at least one predetermined authorization rule 234, there cannot be a triggering event. However, there is a dotted line from the waiting of a triggering event at 238 back to the creation of predetermined authorization rules at 234. This is because additional predetermined authorization rules 234 can be added throughout the use of the system 30, and existing predetermined authorization rules 234 can also be changed or deleted throughout the use of the system 30. In a preferred embodiment, dotted lines from virtually any process step in the Figure could lead back to the creation or modification of predetermined authorization rules at 234.

The system 30 can support many different triggering events at 238. A preferred embodiment of the invention will support at least two categories of triggering events. One type of triggering event is an upcoming certification expiration at 240. In such an event, the user 85 has a certification related to an asset 31 that is subject to an upcoming expiration date, and that such an expiration could have negative consequences with respect to the ability of that user 85 to then engage in the authorized use of an asset 31. An upcoming certification expiration at 240 triggers the processing from steps 246 through 256, described below. The word "upcoming" in step 240 can mean virtually any length of time, because the time interval can be specific to the particular type of certification that is incorporated into one or more predetermined authorization rules.

A second type of triggering event is an event that triggered by an unauthorized attempt to access an asset at 242. Such an event triggers the process steps from 258 through 264, which are described below. Other event types can be incorporated by the system 30 at 242, and such events can trigger processing at 244. Examples of types of events that would be identified at 244 includes such events as: a change in a user 85 certification caused by a change in a certification rule; the adding of a new type of asset 31 to the system 30 which requires new authorization rules; the removal of an asset 31 from the system 30 such that certain user certifications are no longer required; or any other event that does not constitute a certification expiration at 240 or an attempted unauthorized use at 242.

If the triggering event at 238 is the expiration of a user certification, training can be automatically scheduled at 246. Some embodiments may require that the prior approval of the user's 85 supervisor before training is schedule, but such approval can be given using a desktop computer 308 or other data entry device 168. The scheduling of training is done in accordance with the predetermined authorization rule(s) created at 234. Thus different certification types can be treated distinctly by the system 30. Upon the scheduling of training, relevant parties can be notified at 248. The notification can include both the fact that a certification is about to expire, and the fact that training to preserve the certification has been scheduled in response. The phrase "relevant parties" or "interested parties" can include the user 85, the user's supervisor, the account manager 304, the asset using business 90, the maintenance organization 86, the asset supplier 88, or any other organization or party 93 having some conceivable interest in how the asset 31 is managed. The predetermined authorization rules define who is a relevant party with respect to authorization processing and notification.

The system 30 can automatically deliver training materials at 250. Such materials can be physical books and papers, or the training materials at 250 can consist of information in an electronic format such as e-mail, electronic files, web sites, software, etc. In a preferred embodiment of the invention, training itself can occur in an online format, such as through a web site. Other embodiments may require more traditional training environments, including potentially hands-on training relating to the asset 31. In any embodiment, the successful completion of training can result in a confirmation in the system 30 that training was successfully completed. In an embodiment where the organization providing the training is not the organization financially responsible for providing training, an invoice for the training services can be automatically generated at 254. In a preferred embodiment, the invoice can be automatically transmitted electronically via e-mail, web site, or EDI transmission. The process of automatically generating an invoice can occur as early as the initial scheduling of training at 246 or as late as after relevant parties are notified of successful completion at 256. Just as relevant parties may want to know about upcoming certification expirations, those same parties may want to receive notice of training that has been successfully completed. The ability of relevant parties to track training information may facilitate more flexible business arrangements using the system 30. After notice is given at 256, the process can return to waiting for a new triggering event at 238. Records of successfully completed training can be stored on the database 78, which can make it easy to show OSHA compliance with respect to user 85 training.

If the triggering event at 238 was an attempted unauthorized use at 242, then the first step in the analysis can be to identify the cause of the unauthorized status at 258. The cause of the unauthorized status can be asset-based, and thus have nothing to do with the user 85 attempting to engage in the asset 31. For example, if a particular asset 31 cannot be used more than 8 hours in a single day, and an otherwise authorized user 85 attempts to use the asset 31 after the asset 31 has already been used 8 hours that day, an unauthorized use event is correctly triggered at 242. As discussed above, there are many different possible asset-based characteristics or limitations that can result in an unauthorized attempted use of the asset 31. Asset-based trigger events are defined in the creation and modification of predetermined authorization rules at 234.

If the cause of the unauthorized status at 260 is asset-based, the system 30 can prohibit use of the asset 31 at 262, or alternatively, the system 30 can merely flag the unauthorized use at 262. Any relevant information such as the reason why the use was unauthorized, the identity of the user 85, the characteristics of the utilization of the asset 31, and any other potentially important information can be recorded in the database 78. In a preferred embodiment of the invention, the system 30 can be configured to preclude an attempt to engage the asset 31 such as preventing the starting of an engine or by some other means. Whether the use is prohibited at 262 or whether the use is merely flagged as misuse 262, the system 30 then returns to waiting for a triggering event at 238.

If the reason for the unauthorized status is not asset-based, it is likely that the reason is user-based. One type of user-based reason for a non-authorized status is that the user 85 lacks training or lacks recent training needed to preserve a certification status. If the unauthorized status is the result of a lack of training at 264, then training can be scheduled at 246. The loop from 246 through 256 is described in greater detail above. Upon a successful completion of the training at 252, the certification of the user 85 can also be updated so that a lack of training will no longer prevent the authorized use of the asset 31

If the reason for the unauthorized status at 260 is not asset-based and is not training based at 264, the system 30 can identify the underlying reason at 266. Examples of such processing including users 85 who are simply not on the system 30 because they are new employees, trespassers, former employees, employees who have been suspended, or some other reason. The types of reasons that can be identified at 264 can be incorporated into the system 30 during the process of creating predetermined authorization rules at 234.

In addition to the authorization and certification processes illustrated in the Figure, the system 30 can also provide users 85 and other relevant parties with useful information at any time independent of activities being conducted with a particular asset 31 or user 85. For example, the system 30 can allow a user 85 to access online materials such as safety manuals, OSHA regulations, product maintenance information, and any other information that is potentially useful to a user 85 of an asset 31. The system 30 can thus provide a valuable and informative resource for informing users 85 and other relevant parties.

In accordance with the provisions of the patent statutes, the principles and modes of operation of this invention have been explained and illustrated in preferred embodiments. However, it must be understood that this invention may be practiced otherwise than as specifically explained and illustrated without departing from its spirit or scope.

## Claims

1. A method of scheduling training relating to an asset, including a user and an asset, comprising the steps of:
generating a training rule relating a training requirement to an asset;
storing the generated training rule in a computer;
identifying a user whose user certification will expire in a time frame identified by the generated training rule; and
scheduling training for the user, wherein the scheduling is done without human intervention by the computer.

2. A method of scheduling training relating to an asset as in claim 1, further comprising creating an invoice for the scheduled training, wherein the invoice is created without human intervention by the computer.

3. A method of scheduling training relating to an asset as in clam 2, further comprising sending the invoice in an electronic medium to the entity responsible for payment of the invoice, wherein the computer is used to send the invoice.

4. A method of scheduling training relating to an asset as in claim 1, wherein the scheduled training is an online training course.

5. A method of scheduling training relating to an asset as in claim 4, wherein the scheduled training includes an online safety manual.

6. A method of scheduling training relating to an asset as in claim 5, wherein the online safety manual includes an OSHA manual.

7. A method of scheduling training relating to a an asset as in claim 1, further comprising notifying interested parties that training has been scheduled.

8. A method of scheduling training relating to an asset as in claim 7, wherein the interested party is a supervisor of the user.

9. A method of scheduling training relating to an asset as in claim 7, wherein the interested party is not the employer of the user.

10. A method of scheduling training relating to an asset as in claim 1, wherein the asset is a non-fixed movable asset.

11. A method of scheduling training relating to an asset as in claim 1, wherein the training is scheduled for completion before the expiration of the user certification.

12. A method for tracking and enforcing an asset authorization requirement, comprising the steps of:
generating authorization rules relating to the operation of an asset;
storing the generated authorization rules in a computer;
identifying the user of an asset at the time the user attempts to initiate use of the asset;
evaluating the authorization of a user attempting to use an asset;
impeding the unauthorized use of an asset;
tracking attributes of the user related to the generated authorization rules;
monitoring usage of the asset; and
scheduling training in accordance with the generated authorization rules in an automated manner.

13. A method for tracking and enforcing an asset authorization requirement as in claim 12, wherein an unauthorized.user is automatically prohibited from using the asset.

14. A method for tracking and enforcing an asset authorization requirement as in claim 12, wherein a warning is generated by the computer for storing the generated authorization rules, wherein information identifying the unauthorized user, the unauthorized use, and the asset are included in the warning.

15. A method for tracking and enforcing an asset authorization requirement as in claim 12, further comprising creating an invoice in an automated fashion using the computer.

16. A method for tracking and enforcing an asset authorization requirement as in claim 15, further comprising sending the invoice electronically without human intervention from the computer to the payor.

17. A method for tracking and enforcing an asset authorization requirement as in claim 12, further comprising informing relevant parties of an upcoming expiration of a user authorization.

18. A method for tracking and enforcing an asset authorization requirement as in claim 12, further comprising providing training materials accessible in an online format.

19. A method tor tracking and enforcing an asset authorization requirement as in claim 12, wherein the online training materials are safety manuals.

20. A system for tracking and enforcing authorization relating to an asset, comprising:
a user identification;
a user qualification, said user qualification relating to said user identification;
a predefined asset requirement, wherein said predefined asset requirement relates to the asset;
a computer for comparing said user qualification with said predefined asset requirement to determine if said user identification is authorized to use the asset;
a user training course, wherein said computer automatically schedules said user training course so that said user identification becomes authorized to use the asset upon completion of said training course; and
an invoice, said computer automatically generating said invoice for said user training course.

21. A system for tracking and enforcing user authorization relating to an asset as in claim 20, wherein said computer automatically schedules said user training course so that said user training course is completed before said user qualification expires.

22. A system for tracking and enforcing user authorization relating to an asset as in claim 20, wherein said invoice is automatically sent in an electronic format for payment by said computer.
